# EUROPEAN PATENT APPLICATION

(11) **EP 4 325 791 A1**
(43) Date of publication of application: **21.02.2024**
(21) Application number: 22848463.0
(22) Date of filing: 25.07.2022
(51) Int. Cl.: H04L 41/08

(54) **CONFIGURATION UPDATING METHOD AND APPARATUS, AND SYSTEM AND COMPUTER-READABLE STORAGE MEDIUM**

(30) Priority: 29.07.2021 CN 202110864449
(71) Applicant: Huawei Technologies Co., Ltd., Shenzhen, Guangdong 518129 (CN)
(72) Inventor: MA, Qiufang, Shenzhen, Guangdong 518129 (CN); WU, Qin, Shenzhen, Guangdong 518129 (CN); FENG, Chong, Shenzhen, Guangdong 518129 (CN)
(74) Representative: Gill Jennings & Every LLP
(86) International application number: PCT/CN2022/107555
(87) International publication number: WO 2023/005858

(57) **Abstract**

Embodiments of this application disclose a configuration update method, apparatus, and system, and a computer-readable storage medium, and pertain to the field of communication technologies. In the embodiments of this application, when a specific client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

## Description

This application claims priority to Chinese Patent Application No. 202110864449.2, filed on July 29, 2021 and entitled "CONFIGURATION UPDATE METHOD, APPARATUS, AND SYSTEM, AND COMPUTER-READABLE STORAGE MEDIUM", which is incorporated herein by reference in its entirety.

### TECHNICAL FIELD

Embodiments of this application relate to the field of communication technologies, and in particular, to a configuration update method, apparatus, and system, and a computer-readable storage medium.

### BACKGROUND

A network configuration protocol (network configuration protocol, NETCONF) is a mechanism for managing a network device. Management personnel may use this mechanism to perform configuration management on the network device through a client. The configuration management includes configuration update, and the configuration update includes adding, modifying, and deleting configuration data of the network device.

In the conventional technology, a plurality of clients may perform configuration update on a same network device in a scenario in which network devices are managed in a distributed manner. The NETCONF defines a lock operation and an unlock operation. After a session is established between any client and a specific network device, in a process of performing configuration update on the network device, a dataset that needs to be updated in the network device needs to be locked first through the lock operation, and the configuration update is performed on the network device in a state in which the dataset is locked. After the configuration update is performed, the client unlocks the dataset through the unlock operation, or the client unlocks the dataset by closing the session, so that another client performs configuration update on the network device.

However, in the conventional technology, the client needs to perform configuration update on the network device in a state of locking the dataset. In this way, when the dataset in the network device is locked by one client, another client cannot perform configuration update on the network device based on the dataset. It can be learned that the concurrency control efficiency of this solution is relatively low, and this affects other clients to some extent. In addition, when another client urgently needs to perform some important configuration update on the network device based on the dataset, the another client can only forcibly close a session between the client and the network device, and forcibly interrupting the session may affect the client.

### SUMMARY

Embodiments of this application provide a configuration update method, apparatus, and system, and a computer-readable storage medium. If a network device detects that version information, of a data object, respectively recorded by a client and the network device is consistent, a method for performing configuration update on the data object by the network device can reduce configuration update conflicts, and improve concurrency control efficiency. The technical solutions are as follows:
According to a first aspect, a configuration update method is provided. The method includes:
A network device receives a network configuration protocol NETCONF configuration request message sent by a first client, where the NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device. The network device performs the operation on the first data object if the network device detects that the first version information is consistent with first reference version information. The first reference version information is version information, of the first data object, recorded by the network device.

That is, when a specific client performs configuration update on a network device, the client may send a NETCONF configuration request message to the network device without locking the data object. The network device performs configuration update on the data object if the network device detects that the version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

Optionally, before sending the NETCONF configuration request message, the first client may detect version information consistency, or may not detect version information consistency. If the first client detects version information consistency, the NETCONF configuration request message is sent if the first client detects that the first version information is consistent with the first reference version information. That is, both the first client and the network device may detect the version information consistency, to fully reduce configuration conflicts. The first client may not send the configuration request message if the first client detects that the version information is inconsistent. Consequently, an invalid request of the first client is avoided.

Optionally, the method further includes: The network device receives a query message sent by the first client, where the query message includes an identifier of the first data object; and the network device sends a query response message to the first client, where the query response message includes the version information, of the first data object, recorded by the network device. That is, the first client may obtain, in an instant query manner, the version information, of the first data object, recorded by the network device. It should be noted that the first client may send the query message to the network device at any time to query for version information of a specific data object. For example, the first client may send the query message to the network device when it is necessary to detect version information consistency, that is, the network device receives the query message sent by the first client before the network device receives the NETCONF configuration request message sent by the first client. Alternatively, the first client may send the query message to the network device after sending the NETCONF configuration request message for a period of time. For example, the network device receives the query message sent by the first client after performing the operation on the first data object, to notify the first client of latest version information of the first data object, so that the first client verifies whether the network device successfully performs the operation on the first data object. Alternatively, the first client may send the query message to the network device at any other time to query for version information of a specific data object.

Optionally, the method further includes: The network device sends a data change notification message to the first client, where the data change notification message includes the version information, of the first data object, recorded by the network device, and the data change notification message is sent by the network device if the first client subscribes to a change notification of data in the first data object. That is, the first client may obtain, in a subscription manner, the version information, of the first data object, recorded by the network device, that is, obtain latest version information recorded by the network device. For example, if the network device modifies the data in the first data object based on a request of another client, that is, the data in the first data object is changed, the network device sends a data change notification message to the first client, where the data change notification message includes the latest version information, of the first data object, recorded by the network device.

It should be noted that the two implementations (including the instant query manner and the subscription manner) in which the first client obtains the version information, of the first data object, recorded by the network device may be used separately, or may be used in combination. This is not limited in this embodiment of this application.

Optionally, in this embodiment of this application, the version information includes a version number, a timestamp, or a sequence number. For example, the version information includes the timestamp, and the first reference version information is system time, at which the network device completes performing the operation on the first data object, recorded by the network device, or the first reference version information is system time, at which the network device starts to perform the operation on the first data object, recorded by the network device.

In this embodiment of this application, some operations are operations related to two data objects, for example, a copy operation. Optionally, to ensure that configuration data in the two data objects is consistent with that maintained by the first client, the network device needs to separately detect version information consistency of the two data objects. The copy operation is used as an example. Optionally, the operation that the first client requests the network device to perform on the first data object includes the copy operation, the operation indication information further includes fifth version information, the fifth version information is version information, of a fifth data object, recorded by the first client, the fifth data object includes configuration data of the network device, and the copy operation is used to overwrite configuration data in the first data object with the configuration data in the fifth data object. In this case, that the network device performs the operation on the first data object if the network device detects that the first version information is consistent with the first reference version information includes: The network device performs the operation on the first data object if the network device detects that the first version information is consistent with the first reference version information and the fifth version information is consistent with fifth reference version information, where the fifth reference version information is version information, of the fifth data object, recorded by the network device.

Optionally, the method further includes: The network device completes performing the operation on the first data object; and the network device records the first reference version information.

Optionally, that the network device records the first reference version information includes: The network device updates and records the first reference version information if a data granularity of the first data object corresponding to the first reference version information meets a data granularity at which the network device sets an access control function. That is, if the first data object itself has version information, after data change of the first data object occurs, the network device needs to update the version information of the first data object, so as to record a change status of the first data object by using the version information.

Optionally, the operation indication information further includes an identifier of a second data object, the first data object is a child data object of the second data object, and second reference version information is version information, of the second data object, recorded by the network device. That the network device records the first reference version information includes: The network device updates and records the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function. That is, if the first data object itself has version information, and a parent data object (namely, the second data object) of the first data object also has version information, after data change of the first data object occurs, the second data object also changes. In this case, the network device not only needs to update the version information of the first data object, but also needs to update the version information of the second data object.

Optionally, the operation indication information further includes an identifier of a third data object, the first data object is a child data object of the third data object, third reference version information is version information, of the third data object, recorded by the network device, and the access control function that is set by the network device supports a reverse selection mechanism. That the network device records the first reference version information includes: The network device updates and records the first reference version information and the third reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device does not include the identifier of the first data object; or the network device updates and records the first reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device includes the identifier of the first data object. That is, the access control function that is set by the network device supports the reverse selection mechanism, where the reverse selection mechanism is used to reversely select a child data object from the parent data object, so that data change of the child data object does not affect version information of the parent data object.

It can be learned from the foregoing description that, in this embodiment of this application, multi-user concurrent access control is implemented by using an access control mechanism, thereby reducing configuration conflicts. That is, in this solution, a version information attribute is set for the data object by using the access control function, to further perform configuration update on the network device by detecting version information consistency. Optionally, the client may request the network device to set the access control function for the data object before the configuration update is performed on the network device by detecting the version information consistency. This is described below.

Optionally, the method further includes: The network device receives an access control function setting request message sent by the first client, where the access control function setting request message includes the identifier of the first data object; the network device sets an initial version information value for the first data object based on the identifier of the first data object if the network device determines, based on the identifier of the first data object, that the first data object meets an access control function setting condition; and the network device sends a setting success response message to the first client, where the setting success response message indicates the first client to record the version information of the first data object.

Optionally, the setting success response message includes the initial version information value, or the setting success response message indicates the first client to set the initial version information value for the first data object. That is, the network device notifies the first client of the specified initial version information value by using the setting success response message, or the first client automatically sets the initial version information value for the first data object after receiving the setting success response message.

Optionally, the access control function setting condition includes: The network device supports setting of the access control function, and the first data object does not have version information. That is, the network device can successfully set the access control function for the first data object if the network device supports setting of the access control function through the client and the access control function is not set for the first data object.

Optionally, the access control function setting condition further includes: the data granularity of the first data object meets a data granularity that is of setting the access control function and that is supported by the network device. That is, the data granularity that is of setting the access control function and that is supported by the network device may include or not include the data granularity of the first data object. The network device can successfully set the access control function for the first data object if the network device supports setting of the access control function through the client, the access control function is not set for the first data object, and the data granularity that is of setting the access control function and that is supported by the network device includes the data granularity of the first data object.

Optionally, the access control function setting request message further includes a reverse selection mechanism parameter, where the reverse selection mechanism parameter includes an identifier of one or more fourth data objects, and the fourth data object is a child data object of the first data object. That is, the first client can also set the reverse selection mechanism parameter when setting of the access control function for the first data object, to reversely select some child data objects (namely, the fourth data object) of the first data object from the first data object, so that the data change of the fourth data object does not affect the version information of the first data object.

Optionally, the method further includes: The network device receives an access control function setting deletion request message sent by the first client, where the access control function setting deletion request message includes the identifier of the first data object; and the network device deletes the version information of the first data object based on the identifier of the first data object if the network device determines, based on the identifier of the first data object, that the first data object meets an access control function setting deletion condition.

Optionally, the access control function setting deletion condition includes: The network device supports setting of the access control function, and the network device records the version information of the first data object. That is, the network device can successfully delete the version information of the first data object, that is, cancel the access control protection for the first data object, if the network device supports setting of the access control function through the client, and the access control function is already set for the first data object.

Optionally, the method further includes: The network device sends a capability notification message to the first client, where the capability notification message includes a support capability parameter of the access control function, and the support capability parameter indicates whether the network device supports setting of the access control function.

Optionally, the capability notification message further includes a support granularity parameter of the access control function, the support granularity parameter indicates that the network device supports the data granularity of setting the access control function, and the data granularity includes one or more of a dataset granularity, a YANG module granularity, and a data node granularity. That is, the network device can further notify the client of the support capability and the support granularity of the access control function, so that the client accurately sends a request message about setting or deleting the access control function to the network device.

According to a second aspect, a configuration update method is provided. The method includes:

A first client sends a network configuration protocol NETCONF configuration request message to a network device. The NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device. The configuration request message indicates, if the network device detects that the first version information is consistent with first reference version information, the network device to perform the operation on the first data object, where the first reference version information is version information, of the first data object, recorded by the network device.

That is, when a specific client performs configuration update on a network device, the client may send a NETCONF configuration request message to the network device without locking the data object. The network device performs configuration update on the data object if the network device detects that the version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

Optionally, before sending the NETCONF configuration request message, the first client may detect version information consistency, or may not detect version information consistency. If the first client detects version information consistency, the NETCONF configuration request message is sent if the first client detects that the first version information is consistent with the first reference version information. That is, both the first client and the network device may detect the version information consistency, to fully reduce configuration conflicts. The first client may not send the configuration request message if the first client detects that the version information is inconsistent. Consequently, an invalid request of the first client is avoided. Optionally, the first client obtains, in an instant query or subscription manner, the version information, of the first data object, recorded by the network device. An implementation is consistent with the related process in the first aspect, and details are not described herein again.

Optionally, after the first client sends the network configuration protocol NETCONF configuration request message to the network device, the method further includes: The first client receives a configuration success response message sent by the network device; and the first client updates the first version information. That is, the first client can further update the first version information after learning that the network device successfully performs the operation on the first data object, so as to record a change status of the first data object.

Optionally, the configuration success response message includes updated first reference version information. That the first client updates the first version information includes: The first client updates the first version information to the updated first reference version information. That is, the network device directly notifies the first client of the first reference version information after update by using the configuration success response message, and the first client directly updates the first version information to the first reference version information after update.

It should be noted that the configuration update method in the second aspect is consistent with the configuration update method in the first aspect. In the second aspect, only some content corresponding to the first aspect is described. For content that is not described in the second aspect, refer to the first aspect. Details are not described in the second aspect.

According to a third aspect, a configuration update method is provided. The method includes:

A first client sends a network configuration protocol NETCONF configuration request message to a network device if the first client detects that first version information is consistent with first reference version information. The first version information is version information, of a first data object, recorded by the first client, the first reference version information is version information, of the first data object, recorded by the network device, the NETCONF configuration request message carries operation indication information, and the operation indication information indicates that the first client requests the network device to perform an operation on the first data object.

That is, in this embodiment of this application, when a specific client performs configuration update on the network device, the client may send a NETCONF configuration request message to the network device if the client does not lock the data object and detects that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

Optionally, the method further includes: The first client sends a query message to the network device, where the query message carries the identifier of the first data object; and the first client receives a query response message sent by the network device, where the query response message carries the version information, of the first data object, recorded by the network device. That is, the first client may obtain, in an instant query manner, the version information, of the first data object, recorded by the network device.

Optionally, the method further includes: The first client receives a data change notification message sent by the network device, where the data change notification message carries the version information, of the first data object, recorded by the network device, and the data change notification message is received if the first client subscribes to a change notification of data in the first data object. That is, the first client may obtain, in a subscription manner, the version information, of the first data object, recorded by the network device.

It should be noted that, in the first aspect and the second aspect, the network device detects version information consistency, or the client and the network device detect version information consistency, to reduce configuration conflicts and improve concurrency control efficiency. In the third aspect, the client detects version information consistency, to reduce configuration conflicts and improve concurrency control efficiency. That is, a difference between the third aspect and the first aspect/the second aspect lies in that an execution body for detecting version information consistency is different. However, other content described in the first aspect and the second aspect is also applicable to the third aspect. Details are not described in the third aspect in the embodiments of this application.

According to a fourth aspect, a configuration update apparatus is provided. The configuration update apparatus has a function of implementing behavior of the configuration update method in the first aspect. The configuration update apparatus includes one or more modules, and the one or more modules are configured to implement the configuration update method provided in the first aspect.

That is, a configuration update apparatus is provided. The apparatus is used for a network device. The apparatus includes:
a first receiving module, configured to receive a network configuration protocol NETCONF configuration request message sent by a first client, where the NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device; and
a configuration update module, configured to perform the operation on the first data object if the network device detects that the first version information is consistent with first reference version information, where the first reference version information is version information, of the first data object, recorded by the network device.

Optionally, the NETCONF configuration request message is sent if the first client detects that the first version information is consistent with the first reference version information.

Optionally, the apparatus further includes:
a second receiving module, configured to receive a query message sent by the first client, where the query message includes an identifier of the first data object; and
a first sending module, configured to send a query response message to the first client, where the query response message includes the version information, of the first data object, recorded by the network device.

Optionally, the apparatus further includes:
a second sending module, configured to send a data change notification message to the first client, where the data change notification message includes the version information, of the first data object, recorded by the network device, and the data change notification message is sent by the network device if the first client subscribes to a change notification of data in the first data object.

Optionally, the version information includes a timestamp, and the first reference version information is system time, at which the network device completes performing the operation on the first data object, recorded by the network device, or the first reference version information is system time, at which the network device starts to perform the operation on the first data object, recorded by the network device.

Optionally, the apparatus further includes:
a processing module, configured to complete performing the operation on the first data object; and
a recording module, configured to record the first reference version information.

Optionally, the recording module includes:
a first recording submodule, configured to update and record the first reference version information if a data granularity of the first data object corresponding to the first reference version information meets a data granularity at which the network device sets an access control function.

Optionally, the operation indication information further includes an identifier of a second data object, the first data object is a child data object of the second data object, and second reference version information is version information, of the second data object, recorded by the network device.

The recording module includes:
a second recording submodule, configured to update and record the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function.

Optionally, the operation indication information further includes an identifier of a third data object, the first data object is a child data object of the third data object, third reference version information is version information, of the third data object, recorded by the network device, and the access control function that is set by the network device supports a reverse selection mechanism.

The recording module includes:
a third recording submodule, configured to update and record the first reference version information and the third reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device does not include the identifier of the first data object; and
a fourth recording submodule, configured to update and record the first reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device includes the identifier of the first data object.

Optionally, the apparatus further includes:
a third receiving module, configured to receive an access control function setting request message sent by the first client, where the access control function setting request message includes the identifier of the first data object;
a setting module, configured to set an initial version information value for the first data object based on the identifier of the first data object if the network device determines, based on the identifier of the first data object, that the first data object meets an access control function setting condition; and
a third sending module, configured to send a setting success response message to the first client, where the setting success response message indicates the first client to record the version information of the first data object.

Optionally, the setting success response message includes the initial version information value, or the setting success response message indicates the first client to set the initial version information value for the first data object.

Optionally, the access control function setting condition includes: The network device supports setting of the access control function, and the first data object does not have version information.

Optionally, the access control function setting condition further includes: the data granularity of the first data object meets a data granularity, of the access control function that is set, supported by the network device.

Optionally, the access control function setting request message further includes a reverse selection mechanism parameter, where the reverse selection mechanism parameter includes an identifier of one or more fourth data objects, and the fourth data object is a child data object of the first data object.

Optionally, the apparatus further includes:
a fourth receiving module, configured to receive an access control function setting deletion request message sent by the first client, where the access control function setting deletion request message includes the identifier of the first data object; and
a deletion module, configured to delete the version information of the first data object based on the identifier of the first data object if the network device determines, based on the identifier of the first data object, that the first data object meets an access control function setting deletion condition.

Optionally, the access control function setting deletion condition includes: The network device supports setting of the access control function, and the network device records the version information of the first data object.

Optionally, the apparatus further includes:
a fourth sending module, configured to send a capability notification message to the first client, where the capability notification message includes a support capability parameter of the access control function, and the support capability parameter indicates whether the network device supports setting of the access control function.

Optionally, the capability notification message further includes a support granularity parameter of the access control function, the support granularity parameter indicates that the network device supports the data granularity of setting the access control function, and the data granularity includes one or more of a dataset granularity, a YANG module granularity, and a data node granularity.

Optionally, the operation includes a copy operation, the operation indication information further includes fifth version information, the fifth version information is version information, of a fifth data object, recorded by the first client, the fifth data object includes configuration data of the network device, and the copy operation is used to overwrite configuration data in the first data object with the configuration data in the fifth data object.

The configuration update module includes:
a configuration update submodule, configured to perform the operation on the first data object if the network device detects that the first version information is consistent with the first reference version information and the fifth version information is consistent with fifth reference version information, where the fifth reference version information is version information, of the fifth data object, recorded by the network device.

According to a fifth aspect, a configuration update apparatus is provided. The configuration update apparatus has a function of implementing behavior of the configuration update method in the second aspect. The configuration update apparatus includes one or more modules, and the one or more modules are configured to implement the configuration update method provided in the second aspect.

That is, a configuration update apparatus is provided. The apparatus is used for a first client. The apparatus includes:
a first sending module, configured to send a network configuration protocol NETCONF configuration request message to a network device, where the NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device.

The configuration request message indicates, if the network device detects that the first version information is consistent with first reference version information, the network device to perform the operation on the first data object, where the first reference version information is version information, of the first data object, recorded by the network device.

Optionally, the apparatus further includes:
a receiving module, configured to receive a configuration success response message sent by the network device; and
an updating module, configured to update the first version information.

Optionally, the configuration success response message includes updated first reference version information.

The updating module includes:
an updating submodule, configured to update the first version information to the updated first reference version information.

According to a sixth aspect, a configuration update apparatus is provided. The configuration update apparatus has a function of implementing behavior of the configuration update method in the third aspect. The configuration update apparatus includes one or more modules, and the one or more modules are configured to implement the configuration update method provided in the third aspect.

That is, a configuration update apparatus is provided. The apparatus is used for a first client. The apparatus includes:
a first sending module, configured to send a network configuration protocol NETCONF configuration request message to a network device if the first client detects that first version information is consistent with first reference version information.

The first version information is version information, of a first data object, recorded by the first client, the first reference version information is version information, of the first data object, recorded by the network device, the NETCONF configuration request message includes operation indication information, and the operation indication information indicates that the first client requests the network device to perform an operation on the first data object.

Optionally, the apparatus further includes:
a second sending module, configured to send a query message to the network device, where the query message includes an identifier of the first data object; and
a first receiving module, configured to receive a query response message sent by the network device, where the query response message includes the version information, of the first data object, recorded by the network device.

Optionally, the apparatus further includes:
a second receiving module, configured to receive a data change notification message sent by the network device, where the data change notification message includes the version information, of the first data object, recorded by the network device, and the data change notification message is received if the first client subscribes to a change notification of data in the first data object.

According to a seventh aspect, a communication device is provided. The communication device includes a processor and a memory. The memory is configured to store a program for performing the configuration update method provided in the first aspect, the second aspect, or the third aspect, and store data used to implement the configuration update method provided in the first aspect, the second aspect, or the third aspect. The processor is configured to execute the program stored in the memory. The communication device may further include a communication bus, and the communication bus is configured to establish a connection between the processor and the memory.

According to an eighth aspect, a computer-readable storage medium is provided. The computer-readable storage medium stores instruction. When the instructions run on a computer, the computer is enabled to perform the configuration update method according to the first aspect, the second aspect, or the third aspect.

According to a ninth aspect, a computer program product including instructions is provided. When the computer program product runs on a computer, the computer is enabled to perform the configuration update method according to the first aspect, the second aspect, or the third aspect.

Technical effects obtained in the fourth aspect, the fifth aspect, the sixth aspect, the seventh aspect, the eighth aspect, and the ninth aspect are similar to technical effects obtained by using corresponding technical means in the first aspect, the second aspect, or the third aspect. Details are not described herein again.

The technical solutions provided in embodiments of this application can bring at least the following beneficial effects:

In the embodiments of this application, when a specific client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

### BRIEF DESCRIPTION OF DRAWINGS

FIG. 1 is a diagram of an architecture of a system in a configuration update method according to an embodiment of this application;
FIG. 2 is a schematic diagram of a structure of a communication device according to an embodiment of this application;
FIG. 3 is a flowchart of a configuration update method according to an embodiment of this application;
FIG. 4 is a flowchart of another configuration update method according to an embodiment of this application;
FIG. 5 is a flowchart of still another configuration update method according to an embodiment of this application;
FIG. 6 is a flowchart of yet another configuration update method according to an embodiment of this application;
FIG. 7 is a schematic diagram of a structure of a configuration update apparatus according to an embodiment of this application;
FIG. 8 is a schematic diagram of a structure of another configuration update apparatus according to an embodiment of this application; and
FIG. 9 is a schematic diagram of a structure of still another configuration update apparatus according to an embodiment of this application.

### DESCRIPTION OF EMBODIMENTS

To make the objectives, technical solutions, and advantages of embodiments of this application clearer, the following further describes the implementations of this application in detail with reference to the accompanying drawings.

For ease of understanding, some nouns and terms in the embodiments of this application are first explained.

Network configuration protocol (NETCONF): a mechanism used to manage a network device, where management personnel may use this mechanism to perform configuration management on the network device through a client. The configuration management includes configuration update, and the configuration update includes adding, modifying, and deleting configuration data of the network device. The management personnel may further obtain configuration data, status information (status data), and the like of the network device by using the client. NETCONF is a network configuration and management protocol based on an extensible markup language (extensible markup language, XML), and implements communication between the client and the network device based on a remote procedure call (remote procedure call, RPC) mechanism. The network configuration protocol (NETCONF) is defined in the request for comments (request for comments, RFC) 6241 and RFC 8526.

Dataset (datastore): A plurality of datasets (also referred to as configuration datasets, databases, configuration databases, and the like) are allowed to be defined in the NETCONF protocol to store configuration data and status information of a network device. For example, the dataset is a running (running) dataset, a candidate (candidate) dataset, a startup (startup) dataset, and the like. The running dataset is used to store configuration data that takes effect in a running process of the network device. The candidate dataset is used to store configuration data that is configured for the network device but has not taken effect, that is, configuration data that is edited by storage management personnel but has not been committed for a formal effect. After the candidate dataset is committed to the running dataset, the configuration data takes formal effect. The startup dataset stores configuration data used for the next startup of the network device.

YANG (yet another next generation): initially designed as a data modeling language for NETCONF.

YANG model: a data model established using the YANG data modeling language is referred to as a YANG model. The YANG model may be maintained by a NETCONF client and a network device. The YANG model expresses configuration data and status data of the network device in a form of a data node. The YANG model defines a data structure that may be used for a NETCONF-based operation. Data instantiated using the YANG model may be stored in an XML or JSON encoding format.

YANG module (YANG module): One dataset may include one or more YANG modules. That is, one dataset may store configuration data, status information, and the like of a plurality of YANG modules.

Data node (node): One YANG module may include one or more data nodes. A plurality of data modules are organized in a tree structure. That is, one YANG module may store configuration data, status information, and the like of one or more data nodes.

A system architecture used in the embodiments of this application is described below. It should be noted that the network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

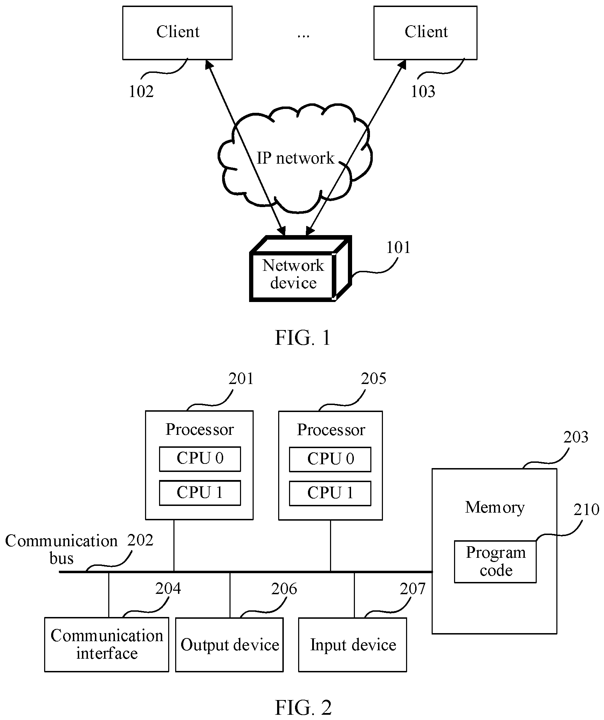

FIG. 1 is a diagram of an architecture of a system in a configuration update method according to an embodiment of this application. The system may be referred to as a network management system (network management system, NMS), a NETCONF system, or the like. Refer to FIG. 1. The system includes a plurality of clients and a network device 101. In FIG. 1, an example in which the plurality of clients include a first client 102 and a second client 103 is used for description. Each client in the plurality of clients is connected to the network device 101 in a wired or wireless manner to perform communication. As shown in FIG. 1, each client and the network device 101 may communicate with each other by using an internet protocol (Internet protocol, IP) network.

The plurality of clients are configured to perform configuration update on the network device 101 by using the NETCONF protocol. For example, the first client 102 in the plurality of clients is used as an example. The first client 102 sends a NETCONF configuration request message to the network device 101 according to the configuration update method provided in this embodiment of this application, to request to perform configuration update on the network device 101. The NETCONF configuration request message may be briefly referred to as a configuration request message, and is described in the following embodiments according to the short name.

The network device 101 is configured to update configuration data of the network device 101 by using the NETCONF protocol. For example, the network device 101 receives the configuration request message sent by the first client 102, and updates the configuration data of the network device 101 according to the configuration update method provided in this embodiment of this application.

Optionally, the system includes a plurality of network devices, each network device can establish a communication connection to at least one client, to perform configuration update by using the connected client, and any client can also perform configuration update on at least one network device. In this embodiment of this application, configuration update of one network device is used as an example for description, and a principle of performing configuration update on another network device is similar.

It can be learned from the foregoing that the system adopts a client (client)/server (server) architecture. The client may also be referred to as a network management device, a management device, a controller, or the like. The server is a network device.

In this embodiment of this application, the client may be installed and deployed on any type of computer device, for example, a server, a desktop computer, a notebook computer, or a mobile phone, or may be installed and deployed on a computing and storage resource of a cloud platform. The network device may be a device such as a router, a switch, a gateway, or a firewall. Optionally, the client may perform configuration update on the network device by running an application program, a web page, or the like. For example, management personnel (also referred to as network operation and maintenance personnel, a network management system, or the like) edit, commit, and query for configuration data and the like by using an application program running on the client.

FIG. 2 is a schematic diagram of a structure of a communication device according to an embodiment of this application. Optionally, the computer device is the client or the network device shown in FIG. 1, and the communication device includes one or more processors 201, a communication bus 202, a memory 203, and one or more communication interfaces 204.

The processor 201 is a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable gate array (field-programmable gate array, FPGA), a generic array logic (generic array logic, GAL), or any combination thereof.

The communication bus 202 is configured to transmit information between the foregoing components. Optionally, the communication bus 202 is classified as an address bus, a data bus, a control bus, and the like. For ease of representation, only one thick line is used to represent the bus in the figure, but this does not mean that there is only one bus or only one type of bus.

Optionally, the memory 203 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this does not constitute a limitation herein. The memory 203 exists independently, and is connected to the processor 201 through the communication bus 202, or the memory 203 is integrated with the processor 201.

The communication interface 204 is configured to communicate with another device or a communication network by using any apparatus such as a transceiver. The communication interface 204 includes a wired communication interface, or may optionally include a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like.

Optionally, in some embodiments, the communication device includes a plurality of processors, for example, a processor 201 and a processor 205 shown in FIG. 2. Each of the processors is a single-core processor, or is a multi-core processor. Optionally, the processor herein is one or more devices, circuits, and/or processing cores for processing data (such as computer program instructions).

During specific implementation, in an embodiment, the communication device further includes an output device 206 and an input device 207. The output device 206 communicates with the processor 201, and may display information in a plurality of manners. For example, the output device 206 is a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and can receive an input from a user in a plurality of manners. For example, the input device 207 is a mouse, a keyboard, a touchscreen device, or a sensing device.

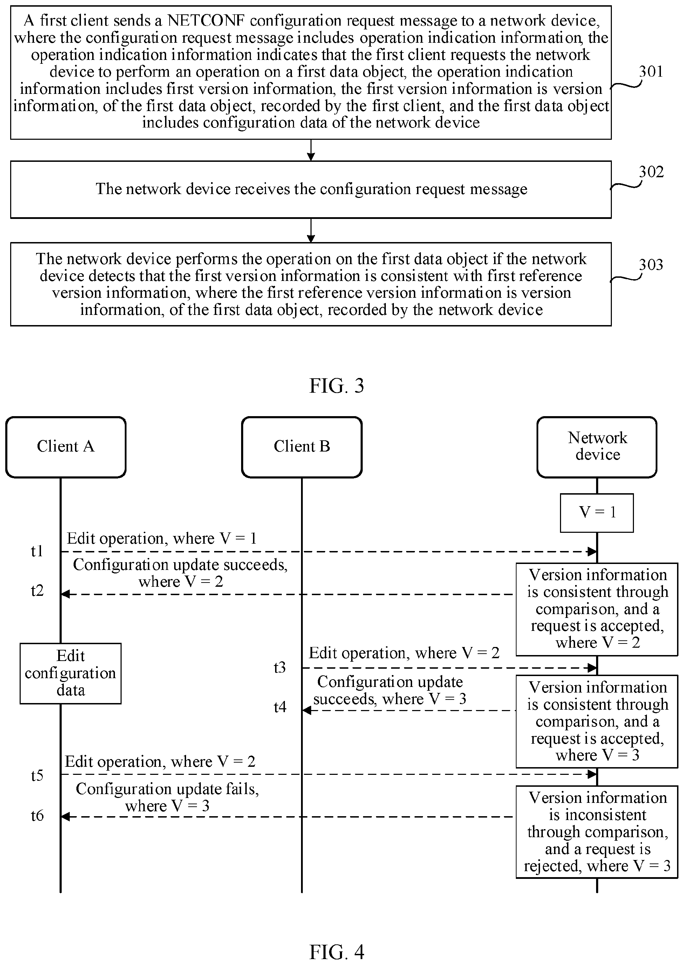

In some embodiments, the memory 203 is configured to store program code 210 for executing the solutions of this application, and the processor 201 may execute the program code 210 stored in the memory 203. The program code includes one or more software modules, and the communication device can implement, by using the processor 201 and the program code 210 in the memory 203, the configuration update method provided in the following embodiments in FIG. 3 to FIG. 6.

The following describes the configuration update method provided in the embodiments of this application.

In the embodiments of this application, in a process in which the first client performs configuration update on the network device, the first client does not need to lock a data object (such as a dataset, a YANG module, or a data node) that needs to be updated in the network device. The first client and the network device respectively record version information of the data object, and determine, by detecting version information consistency, whether to perform configuration update or suspend configuration update. In an implementation, after the first client sends a configuration request message to the network device, the network device determines whether to perform configuration update by detecting version information consistency. In another implementation, the first client detects version information consistency, and sends a configuration request message to the network device after detecting that the version information is consistent, and the network device performs configuration update after receiving the configuration request message. In still another implementation, the first client detects version information consistency, and sends a configuration request message to the network device after detecting that the version information is consistent, and the network device also detects version information consistency after receiving the configuration request message, and performs configuration update when detecting that the version information is consistent.

It should be noted that, in the embodiments of this application, the version information of the data object is essentially optimistic lock information, that is, in this solution, multi-user concurrent access control is implemented by using an optimistic lock mechanism, to reduce configuration conflicts. The optimistic lock mechanism may also be referred to as a concurrent access control mechanism. In the embodiments of this application, an access control function is set (which may also be referred to as setting lock protection, setting access control protection, or setting an optimistic lock) for a data object to set a version information attribute for the data object, to further perform configuration update on the network device by detecting version information consistency. For ease of understanding, an implementation of setting the access control protection for the data object is first described before the description of performing configuration update on the network device by detecting version information consistency. It should be noted that, setting access control protection for a specific data object is essentially setting an optimistic lock (which may also be considered as setting lock protection) for the data object, and whether access control protection can be set for the data object needs to be determined depending on whether the network device supports setting of the access control function (which may also be referred to as an optimistic lock function). In the embodiments of this application, the network device supports setting of the access control function, so that the configuration update method provided in the embodiments of this application can be implemented. The setting access control protection for the data object includes adding access control protection and deleting access control protection. The following describes implementations of adding access control protection and deleting access control protection for the data object respectively.

First, an implementation of adding access control protection for a data object is described, and an example in which a first client requests a network device to add access control protection for a first data object is used for description. It should be noted that, all other clients than the first client may request the network device to add access control protection for one or more data objects. A principle is similar to that of requesting, by the first client, the network device to add access control protection for the first data object, and details are not described one by one in this specification.

In this embodiment of this application, the first client sends an access control function setting request message to the network device, and the network device receives the access control function setting request message sent by the first client. The access control function setting request message may also be referred to as an access control protection addition request message, a protection addition request message, or the like. The following uses the protection addition request message as an example for description. The protection addition request message sent by the first client includes an identifier of the first data object. The network device sets an initial version information value for the first data object based on the identifier of the first data object if the network device determines, based on the identifier of the first data object, that the first data object meets an access control function setting condition. The network device sends a setting success response message to the first client, where the setting success response message indicates the first client to record version information of the first data object. The access control function setting condition may also be referred to as an access control protection addition condition or a protection addition condition, and the setting success response message may also be referred to as an addition success response message. The following uses the protection addition condition and the addition success response message as examples for description.

Optionally, in this embodiment of this application, the version information includes a version number, a timestamp, or a sequence number. Optionally, the version number is an explanatory naming format that includes one or more of a letter, a numeral, a symbol, and the like. An example of version 1.2.0 is used. This version number includes letters version, numerals, and symbols, and the naming format is major version number, subversion number. minor number of a version. For another example, if the version number is 1, the version number includes a numeral. Using the timestamp as the version information of the data object is that the network device uses system time information as the version identifier of the data object. The sequence number is a group of numerical sequences, and the numerical sequence may be generated randomly or may be generated according to a generation rule. For example, the network device obtains a sequence number based on operation completion time information of the data object by using a hash algorithm, and uses the sequence number as the version information of the data object. For example, if the version information is the version number, the initial version information value that is set by the network device for the first data object may be 1 or version 1.0.0. If the version information is the timestamp, the initial version information value that is set by the network device for the first data object may be system time at which the network device sets access control protection for the first data object.

Optionally, the addition success response message includes the initial version information value that is set by the network device for the first data object. In this way, the first client records the initial version information value included in the addition success response message as the version information of the first data object. Alternatively, the addition success response message indicates the first client to set the initial version information value for the first data object. In this way, after receiving the addition success response message, the first client sets the initial version information value for the first data object, and records the specified initial version information value as the version information of the first data object.

Optionally, in this embodiment of this application, the protection addition condition includes: The network device supports setting of an access control function, and the first data object does not have version information. That is, the network device can successfully add the access control protection for the first data object if the network device supports setting of the access control function, and the access control protection is not added for the first data object. It should be noted that, that the network device supports setting of the access control function may be considered as that the network device supports the client in setting of the access control function for the data object, that is, the network device supports the client in dynamically setting of the access control function. Optionally, if the network device is configured to support the access control function by default, but does not support the client in dynamically setting of the access control function, it is considered that the network device does not support setting of the access control function, or does not support dynamically setting of the access control function. For example, that the access control function is already set for the data object is configured by default on the network device before delivery, and the access control function for the data object is not supported to be added or deleted on the client.

It can be learned from the foregoing that a data object that stores configuration data of the network device may be a dataset, a YANG module, and a data node. In other words, a data granularity of a data object in this embodiment of this application may be a dataset granularity, a YANG module granularity, or a data node granularity. Based on this, optionally, the data granularity supported when the network device sets the access control function may include one or more of the dataset granularity, the YANG module granularity, and the data node granularity. That is, in this solution, the access control protection may be set only for the dataset, the access control protection may be set only for the YANG module, the access control protection may be set only for the data node device, the access control protection may be set for the dataset and the YANG module, the access control protection may be set for the dataset and the data node, the access control protection may be set for the YANG module and the data node device, or the access control protection may be set for the dataset, the YANG module, and the data node.

Based on this, optionally, the protection addition condition further includes: A data granularity of the first data object meets a data granularity that is of setting the access control function and that is supported by the network device. That is, the network device can successfully add the access control protection for the first data object if the network device supports setting of the access control function, the access control protection is not added for the first data object, and the data granularity of the first data object meets the condition.

It should be noted that, if the network device supports setting of the access control function by default, and does not limit the supported data granularity of setting the access control function, after receiving the protection addition request message of the first client, the network device adds the access control protection for the data object requested by the first client.

In this embodiment of this application, if the first data object does not meet the protection addition condition, the network device sends an addition failure response message to the first client, where the addition failure response message may also be referred to as a setting failure response message. Optionally, the addition failure response message carries a cause of an access control protection addition failure. The cause of the access control protection addition failure may be that the network device does not support setting of the access control function, or the network device supports setting of the access control function, but the access control protection is already added for the first data object.

For example, the access control protection is set for the data object by extending NETCONF. For example, a set-ol-capability operation is defined to set the access control protection for the data object, and parameters in <set-ol-capability> include <target> and <support>. The <target> parameter carries an identifier of a data object for which the access control protection is requested to be added. A value of the <support> parameter is "True" or "False", where "True" indicates that the access control protection is requested to be added for the data object indicated by the <target> parameter, and "False" indicates that the access control protection is requested to be deleted for the data object indicated by the <target> parameter.

For example, it is assumed that the first client requests to add the access control protection for a dataset. A protection addition request message sent by the first client to the network device carries the following information. The <target> parameter indicates a dataset, and it indicates that the first client requests to add the access control protection for the dataset indicated by the <target> parameter. The dataset is a running dataset. That is, content in the <set-ol-capability> parameter indicates adding the access control protection for the running dataset.

```
               <rpc message-id="101"
                     xmlns="urn:ietf:params:xml:ns:netconf:base:1.0">
                 <set-ol-capability>
                    <target>
                      <running/>
                    </target>
                    <support>
                      True
                    </support>
                 </set-ol-capability>
              </rpc>
```

If the running dataset meets the protection addition condition, an addition success response message sent by the network device to the first client carries the following information. <ok/> indicates that the access control protection is successfully added.

```
               <rpc-reply message-id="101"
                       xmlns="um:ietf:params:xml:ns:netconf:base:1.0">
                 <ok/>
               </rpc-reply>
```

If the running dataset does not meet the protection addition condition because the network device does not support setting of the access control function for the dataset, an addition failure response message sent by the network device to the first client carries the following information. Content in the <rpc-error> parameter indicates an access control protection addition failure and a failure cause. "This datastore cannot be set revision" in the <error-message> parameter indicates the cause of the access control protection addition failure, that is, the cause is that the network device does not support setting the access control protection for the dataset.

```
               <rpc-reply xmlns="urn:ietf:params:xml:ns:netconf:base: 1.0">
                 <rpc-error>
                    <error-type>rpc</error-type>
                    <error-tag>operation-failed</error-tag>
                    <error-severity>error</error-severity>
                    <error-message xml:lang="en">
                      This datastore cannot be set revision
                    </error-message>
                 </rpc-error>
               </rpc-reply>
```

If the running dataset does not meet the protection addition condition because the running dataset already has version information (that is, the access control protection is already added), an addition failure response message sent by the network device to the first client carries the following information. Content in the <rpc-error> parameter indicates an access control protection addition failure and a failure cause. "Datastore revision already exists" in the <error-message> parameter indicates the cause of the access control protection addition failure, that is, the cause is that the access control protection is already added for the dataset.

```
               <rpc-reply xmlns="urn:ietf:params:xml:ns:netconf:base: 1.0">
                 <rpc-error>
                    <error-type>rpc</error-type>
                    <error-tag>operation-failed</error-tag>
                    <error-severity>error</error-severity>
                    <error-message xml:lang="en">
                      Datastore revision already exists
                    </error-message>
                 </rpc-error>
               </rpc-reply>
```

For another example, it is assumed that the first client requests to add the access control protection for a data node. A protection addition request message sent by the first client to the network device carries the following information. The <target> parameter indicates a data node, and it indicates that the access control protection is requested to be added for the data node indicated by the <target> parameter. The data node is a data node in the "/t:top/t:interface/t:name" path.

```
               <rpc message-id="101"
                     xmlns="urn:ietf:params:xml:ns:netconf:base:1.0"
                     xmlns:ol="urn:changjia:params:xml:ns:yang:optimistic-locking>
                 <set-ol-capability>
                    <target>
                      /t:top/t:interface/t:name
                    </target>
                    <support>true</support>
                 </set-ol-capability>
               </rpc>
```

An addition success response message sent by the network device to the first client may be the same as the addition success response message in the foregoing example if the data node meets the protection addition condition.

If the data node does not meet the protection addition condition because the network device does not support setting of the access control function for the data node, an addition failure response message sent by the network device to the first client carries the following information, ""name" element cannot be set revision" in the <error-message> parameter indicates a cause of an access control protection addition failure, that is, the cause is that the network device does not support setting the access control protection for the data node.

```
               <rpc-reply xmlns="urn:ietf:params:xml:ns:netconf:base: 1.0">
                 <rpc-error>
                    <error-type>rpc</error-type>
                    <error-tag>operation-failed</error-tag>
                    <error-severity>error</error-severity>
                    <error-message xml:lang="en">
                      "name" element cannot be set revision
                    </error-message>
                 </rpc-error>
               </rpc-reply>
```

If the data node does not meet the protection addition condition because the data node already has version information (that is, the access control protection is already added), an addition failure response message sent by the network device to the first client carries the following information. Content in the <rpc-error> parameter indicates an access control protection addition failure and a failure cause, and ""name" revision already exists" in the <error-message> parameter indicates a cause of the access control protection addition failure, that is, the cause is that the access control protection is already added for the data node.

```
               <rpc-error>
                    <error-type>rpc</error-type>
                    <error-tag>operation-failed</error-tag>
                    <error-severity>error</error-severity>
                    <error-message xml:lang="en">
                      "name" revision already exists
                    </error-message>
                 </rpc-error>
               </rpc-reply>
```

It can be learned from the foregoing that, in this embodiment of this application, the version information is set to record a change status of the data object. For example, the version information of the data object may be updated after data of the data object is changed. However, in some cases, data changes of some child data objects have little impact on a parent data object, or for other causes, network management personnel may not expect the network device to record a change status of a child data object in a parent data object. In this case, when the access control protection is set for the parent data object, these child data objects are reversely selected. Subsequently, the network device does not update the version information of the parent data object after performing configuration update on these child data objects. Based on this, in this embodiment of this application, a reverse selection mechanism is further provided, that is, the access control function that is set by the network device supports the reverse selection mechanism. The network device determines, based on a reverse selection mechanism parameter, whether configuration update of a specific data object affects version information of an upper-level data object (parent data object) of the data object. Correspondingly, the reverse selection mechanism parameter may be further set when the first client adds the access control protection for the data object. Optionally, the protection addition request message further includes the reverse selection mechanism parameter. The reverse selection mechanism parameter includes an identifier of one or more fourth data objects, the fourth data object is a child data object of the first data object, and a data granularity of the fourth data object is smaller than the data granularity of the first data object. That is, the one or more fourth data objects are reversely selected from the first data object when the access control protection is added for the first data object, so that subsequent configuration update of the one or more fourth data objects does not affect the version information of the first data object.

For example, the access control protection is set for the data object by extending NETCONF. For example, a set-ol-capability operation is defined to set the access control protection for the data object, and <reverse-match> is defined to set the reverse selection mechanism parameter. Parameters in <set-ol-capability> include <target>, <support>, and <reverse-match>. A protection addition request message sent by the first client to the network device carries the following information. Content in the <set-ol-capability> parameter indicates adding the access control protection for a candidate dataset, and setting an identifier of a data node included in the candidate dataset to the reverse selection mechanism parameter. The <target> parameter carries an identifier, namely, candidate, of a data object for which the first client requests to add the access control protection. If a value of the <support> parameter is "True", it represents that the access control protection is added for the data object indicated by the <target> parameter. "/ietf-interface/address/name" in the <reverse-match> parameter is an identifier of a data node included in the candidate dataset, and represents that "/ietf-interface/address/name" is set to an identifier of a data object included in the reverse selection mechanism parameter. Optionally, in this embodiment of this application, a data node is identified by using a path of the data node. That is, a data node in a path specified in the <reverse-match> parameter belongs to a category of a dataset indicated by the <target> parameter, but a change of configuration data in the data node does not affect version information of the dataset. Simply, the first client requests the network device to add an optimistic lock to the candidate dataset. However, modification of the data node in the "/ietf-interface/address/name" path is not limited by the optimistic lock, and a change of the data node does not affect the version information of the candidate dataset.

```
               <rpc message-id="101"
                     xmlns="urn:ietf:params:xml:ns:netconf:base:1.0">
                 <set-ol-capability>
                    <target>
                      <candidate/>
                    </target>
                    <support>
                      True
                    </support>
                    <reverse-match>
                    /ietf-interface/address/name
                    </reverse-match>
                 </set-ol-capability>
             </rpc>
```

It should be further noted that the foregoing example is described by using an example in which one data node is reversely selected from one dataset. In this embodiment of this application, one or more data nodes may be reversely selected from one YANG module or one dataset, or one or more YANG modules may be reversely selected from one dataset. In addition, the access control protection may still be separately set for the data object in the <reverse-match> parameter if a data granularity of the data object in the <reverse-match> parameter meets the data granularity that is of setting the access control function and that is supported by the network device.

The foregoing describes an implementation of adding the access control protection for the data object. The following describes an implementation of deleting access control protection for a data object. Herein, an example in which a first client requests a network device to delete access control protection for a first data object is still used for description. It should be noted that, all other clients than the first client may request the network device to delete access control protection for one or more data objects. A principle is similar to that of requesting, by the first client, the network device to delete the access control protection for the first data object, and details are not described one by one in this specification.

In this embodiment of this application, the first client sends an access control function setting deletion request message to the network device, where the access control function setting deletion request message includes an identifier of the first data object. The network device receives the access control function setting deletion request message sent by the first client. The network device deletes version information of the first data object based on the identifier of the first data object if the network device determines, based on the identifier of the first data object, that the first data object meets an access control function setting deletion condition. Optionally, the access control function setting deletion request message may also be referred to as an access control protection deletion request message, a protection deletion request message, or the like, and the access control function setting deletion condition may also be referred to as an access control protection deletion condition or a protection deletion condition. In the following embodiment, the protection deletion request message and the protection deletion condition are used as an example for description.

Optionally, in this embodiment of this application, the protection deletion condition includes: The network device supports setting of an access control function, and the network device records version information of the first data object. That is, the network device can successfully delete an optimistic lock of the first data object if the network device supports setting of the access control function, and the access control protection is already added for the first data object.

In this embodiment of this application, the network device sends a deletion success response message to the first client after deleting the version information of the first data object. Optionally, after receiving the deletion success response message, the first client deletes the version information, of the first data object, recorded by the first client.

In this embodiment of this application, the network device sends a deletion failure response message to the first client if the first data object does not meet the protection deletion condition. Optionally, the deletion failure response message includes a cause of an access control protection deletion failure. The cause of the access control protection deletion failure may be that the network device does not support setting of the access control function, or the network device supports setting of the access control function, but the access control protection is not added for the first data object.

For example, the access control protection is set for the data object by extending NETCONF. For example, a set-ol-capability operation is defined to set the access control protection for the data object, and parameters in <set-ol-capability> include <target> and <support>. A protection deletion request message sent by the first client to the network device carries the following information. Content in the <set-ol-capability> parameter indicates deleting the access control protection for a running dataset, and a value of the <target> parameter is an identifier, namely, running, of a data object for which the first client requests to delete the access control protection. If a value of the <support> parameter is "False", it indicates that the access control protection is deleted for the data object indicated by <target>.

```
               <rpc message-id="101"
                     xmlns="urn:ietf:params:xml:ns:netconf:base:1.0">
                 <set-ol-capability>
                    <target>
                      <running/>
                    </target>
                    <support>
                      False
                    </support>
                 </set-ol-capability>
              </rpc>
```

If the first data object meets the protection deletion condition, a deletion success response message sent by the network device to the first client carries the following information. <ok/> indicates that the access control protection is successfully deleted.

```
               <rpc-reply message-id="101"
                       xmlns="um:ietf:params:xml:ns:netconf:base:1.0">
                 <ok/>
               </rpc-reply>
```

If the first data object does not meet the protection deletion condition because the network device does not support setting of the access control function, a deletion failure response message sent by the network device to the first client carries the following information. Content in the <rpc-error> parameter indicates an access control protection deletion failure and a failure cause. "This datastore cannot be set revision" in the <error-message> parameter indicates the cause of the access control protection deletion failure, that is, the cause is that the network device does not support setting the access control protection for the dataset.

```
               <rpc-reply xmlns="urn:ietf:params:xml:ns:netconf:base: 1.0">
                 <rpc-error>
                    <error-type>rpc</error-type>
                    <error-tag>operation-failed</error-tag>
                    <error-severity>error</error-severity>
                    <error-message xml:lang="en">
                      This datastore cannot be set revision
                    </error-message>
                 </rpc-error>
               </rpc-reply>
```

If the first data object does not meet the protection deletion condition because the first data object does not have version information (that is, the access control protection is not added), a deletion failure response message sent by the network device to the first client carries the following information. Content in the <rpc-error> parameter indicates an access control protection deletion failure and a failure cause. "Datastore revision don't exist" in the <error-message> parameter indicates a cause of the access control protection deletion failure, that is, the cause is that the access control protection is not added for the dataset.

```
               <rpc-reply xmlns="urn:ietf:params:xml:ns:netconf:base: 1.0">
                 <rpc-error>
                    <error-type>rpc</error-type>
                    <error-tag>operation-failed</error-tag>
                    <error-severity>error</error-severity>
                    <error-message xml:lang="en">
                      Datastore revision don't exist
                    </error-message>
                 </rpc-error>
               </rpc-reply>
```

The foregoing describes implementations of adding the access control protection and deleting the access control protection for the data object. Optionally, in the embodiments of this application, the network device and the first client can further exchange respective capability information. For example, the network device notifies the first client of a capability of the network device to support the access control function, so that the first client accurately sends various requests to the network device. Optionally, the network device and the first client first exchange respective capability information after a session connection is established between the network device and the first client. Alternatively, the network device and the first client may exchange respective capability information at any time in a session process. This is not limited in the embodiments of this application. The following describes an implementation in which the network device notifies the first client of the capability of the network device to support the access control function.

In this embodiment of this application, the network device sends a capability notification message to the first client, where the capability notification message includes a support capability parameter of the access control function, the support capability parameter includes a first value or a second value, the first value indicates that the network device supports setting of the access control function, and the second value indicates that the network device does not support setting of the access control function.

Optionally, the first value and the second value may be values, character strings, or the like. This is not limited in this embodiment of this application. For example, the first value and the second value are respectively "1" and "0", or the first value and the second value are respectively "dynamic" and "static".

It can be learned from the foregoing that, in some embodiments, the network device imposes a limitation on a supported data granularity of setting the access control function. Based on this, optionally, the capability notification message further includes a support granularity parameter of the access control function, the support granularity parameter indicates that the network device supports the data granularity of setting the access control function, and the data granularity includes one or more of a dataset granularity, a YANG module granularity, and a data node granularity.

For example, it is assumed that the capability notification message sent by the network device to the first client carries a basic-mode parameter and a granularity parameter, where the basic-mode parameter and the granularity parameter are respectively a support capability parameter and a support granularity parameter of the access control function. A value of the basic-mode parameter is "dynamic" or "static". "dynamic" indicates that dynamic addition and deletion of the access control protection are supported, "static" indicates that dynamic addition and deletion of the access control protection are not supported, that is, the network device supports the access control function statically. A capability of the network device to support the access control function is determined before delivery, and the access control protection cannot be dynamically added or deleted through the client in a running process of the network device. A value of the granularity parameter includes one or more of "datastore", "module", and "node". "datastore" indicates that the network device supports optimistic lock maintenance for a data object of the dataset granularity. If configuration data in a dataset for which the access control protection is already added is modified and the modified data is not data in a reverse mechanism parameter, the network device needs to update version information of the dataset. "module" indicates that the network device supports optimistic lock maintenance for a data object of the YANG module granularity, "node" indicates that the network device supports optimistic lock maintenance for a data object of the data node granularity.

Based on the foregoing example, a capability notification message sent by the network device to the first client may carry the following information. Herein, an example in which the network device sends a hello message to the first client is used. The hello message carries a <capabilities> parameter set, the <capabilities> parameter set includes one or more <capability> parameters, and each <capability> parameter carries one type of capability information of the network device. The third <capability> parameter carried in the hello message carries a support capability parameter (namely, the basic-mode parameter) and a support granularity parameter (namely, the granularity parameter) of the access control function. "basic-mode=dynamic" in the <capability> parameter indicates that a first value is "dynamic", indicating that the network device supports dynamically setting of the access control function. "granularity=datastore, module" indicates that a data granularity that is of setting the access control function and that is supported by the network device includes the dataset granularity and the YANG module granularity.

```
               <hello xmlns="urn:ietf:params:xml:ns:netconf:base: 1.0">
               <capabilities>
                 <capability>
                    urn:ietf:params:netconf:base: 1.1
                 </capability>
                 <capability>
                    urn:ietf:params:netconf:capability:startup:1.0
                 </capability>
                 <capability>
          urn:ietf:params:netconf:capability:optimistic-locking:
1.0?basic-mode=dynamic&granularity=datastore,m
          odule
                 </capability>
               </capabilities>
               <session-id>4</session-id>
             </hello>
```

The foregoing describes an implementation process in which the network device sets the access control protection for the data object by using the client when the client performs configuration update on the network device based on NETCONF, and further describes a case in which the network device notifies the client of information such as a support capability and a support granularity of the access control function. The following describes application, based on set access control protection, between the network device and the client during configuration update, that is, an implementation process of detecting version information consistency during a configuration update process.

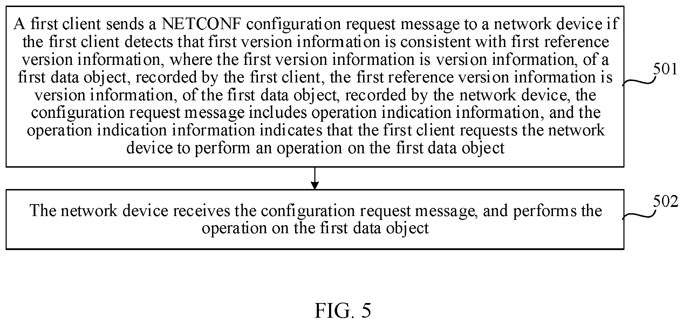

It can be learned from the foregoing that, in this embodiment of this application, the network device detects version information consistency, the client detects version information consistency, or the client and the network device detect version information consistency, to reduce configuration conflicts and improve concurrency control efficiency. The following first describes, by using the following embodiment in FIG. 3, an implementation in which the network device participates in detecting version information consistency, including an implementation in which the network device performs detection separately and an implementation in which both the client and the network device perform detection. Then, an implementation of independent detection by the client is described by using the following embodiment in FIG. 5.

FIG. 3 is a flowchart of a configuration update method according to an embodiment of this application. In the embodiment in FIG. 3, the network device participates in detecting version information consistency. Refer to FIG. 3. The method includes the following steps.

Step 301: A first client sends a NETCONF configuration request message to a network device, where the configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device.

It can be learned from the foregoing that, the first client and the network device respectively record version information, of the data object, that needs to be updated, and perform configuration update by detecting the version information consistency. In addition, the first client sends a configuration request message to the network device to perform configuration update on the network device. Before sending the configuration request message, the first client may detect version information consistency, or may not detect version information consistency. If the first client detects version information consistency, the configuration request message is sent if the first client detects that the first version information is consistent with first reference version information. The first client directly sends the configuration request message to the network device if the first client does not detect version information consistency.

Optionally, in this embodiment of this application, the version information is a version number, a timestamp, or a sequence number. The version number is an explanatory naming format that includes a letter, a numeral, a symbol, and the like. An example of version 1.2.0 is used. This version number includes letters version, numerals, and symbols, and the naming format is major version number, subversion number, minor number of a version. Using the timestamp as the version information of the data object is that the network device uses system time information as the version identifier of the data object. The sequence number is a group of numerical sequences, and the numerical sequence may be generated randomly or may be generated according to a generation rule. For example, the network device obtains a sequence number based on operation completion time information of the data object by using a hash algorithm, and uses the sequence number as the version information of the data object. That is, the network device and the client may record version information of a data object by using the version number, the timestamp, or the sequence number. In some other embodiments, the version information may also be other mark information that can record a change of configuration data in the data object. Optionally, in this embodiment of this application, data objects are divided to include a dataset, a YANG module, and/or a data node based on a data granularity.

In this embodiment of this application, the configuration request message sent by the first client includes the operation indication information, and the operation indication information indicates that the first client requests the network device to perform an operation on the first data object. In addition, in the embodiment in FIG. 3, the network device needs to participate in detecting version information consistency. Therefore, the operation indication information includes the first version information. The first version information is the version information, of the first data object, recorded by the first client, and the first data object includes the configuration data in the network device. For example, the first data object is a running dataset, and the first version information is a version number version 1.0, of the running dataset, recorded by the first client. For another example, the first data object is a YANG module whose name is ietf-interface-desc, and the first version information is a timestamp 2021-07-22 10:45 UTC, of the YANG module "ietf-interface-desc", recorded by the first client. For another example, the first data object is a data node "mtu" in the YANG module "ietf-interface-desc", and the first version information is a sequence number 0001, of the data node "mtu", recorded by the first client.

Herein, a YANG model that includes data nodes in the YANG module "ietf-interface-desc" is provided as an example, as shown in the following. The data nodes in the YANG module "ietf-interface-desc" include "interface", "name", "description", "mtu", and "ip-address".

```
               module ietf-interface-desc {
               ...
                   container interfaces {
                       list interface {
                         key name;
                         leaf name {
                           type string;
                         }
                         leaf description {
                           type string; }
                         leaf mtu {
                           type uint16;
                         }
                         leaf-list ip-address {
                           type inet:ip-address;
                         }
                       }
               }}
```

It should be noted that, it is assumed that a type or data granularity of the first data object is set or defined as a YANG module, and the NETCONF configuration request message sent by the first client and received by the network device includes the operation indication information, where the operation indication information indicates that the first client requests the network device to perform an operation on a "name" node in the YANG module whose name is ietf-interface-desc. In this case, the first data object herein is the YANG module whose name is ietf-interface-desc rather than the data node "name". Therefore, the first version information is version information of the YANG module "ietf-interface-desc". Similarly, it is assumed that the type of the first data object is set or defined as a dataset, and the NETCONF configuration request message sent by the first client and received by the network device includes the operation indication information, where the operation indication information indicates that the first client requests the network device to perform an operation on the "host-name" node in the running dataset. In this case, the first data object herein is the running dataset rather than the data node "host-name". Therefore, the first version information is version information of the running dataset.

Optionally, the operation that the first client requests the network device to perform on the first data object includes one or more of operations such as editing (edit-config), copying (copy-config), committing (commit), or deleting (delete-config).

It should be noted that the edit operation and the delete operation in the NETCONF are operations related to one data object, and the network device only needs to detect version information consistency of this data object. The copy operation in the NETCONF is an operation related to two data objects. Optionally, to ensure that configuration data in the two data objects is consistent with that maintained by the first client, the network device needs to separately detect version information consistency of the two data objects. For example, the commit operation in NETCONF is an operation related to two data objects, that is, one data object is a running dataset, and the other data object is a candidate dataset. The running dataset is a first data object. The network device needs to detect version information consistency of the running dataset. However, for the candidate dataset, the network device may detect or not detect version information consistency of the candidate dataset. Optionally, if the network device does not detect version information of the candidate dataset, corresponding version information may not be set for the candidate. The following describes, by using an example in which the operation includes a copy operation, a case in which version information consistency of two data objects needs to be separately detected in this embodiment of this application.

In this embodiment of this application, if the operation that the first client requests the network device to perform on the first data object includes a copy operation, the operation indication information further includes fifth version information, where the fifth version information is version information, of the fifth data object, recorded by the first client, and the fifth data object includes configuration data of the network device. The copy operation is used to overwrite the configuration data in the first data object with the configuration data in the fifth data object. The first data object and the fifth data object are different data objects.

Optionally, in this embodiment of this application, these operations defined by NETCONF are extended to carry version information, so as to implement configuration update on the network device. The following describes this by using an example in which the operation includes an edit operation, a commit operation, and a copy operation.

For example, an example in which the operation includes the edit operation and the version information is a version number (revision) is used to extend an edit-config operation defined by NETCONF, to carry the first version information. For example, a version information attribute is added after the identifier of the first data object on which configuration update needs to be performed. For example, in the following example, the operation indication information includes content in an <edit-config> parameter. <running ol:revision="1"/> in a <target> parameter indicates that the first data object is a running dataset, and that a version number, of the running dataset, recorded by the first client is 1. In addition, it may be further learned that the <edit-config> parameter indicates an edit operation that the first client requests the network device to perform, and the <target> parameter is used to carry the identifier of the first data object. It should be noted that, in the edit-config operation defined by NETCONF, the edit-config operation may indicate, by using an operation parameter, that a specific operation is merging (merge), deletion, replacement, or the like. For example, in the following example, <interface xc:operation="merge"> indicates to perform a merge operation on configuration data of a corresponding interface. It should be further noted that the operation parameter is an optional parameter. If the <edit-config> parameter does not carry the operation parameter, it indicates that the edit-config operation indicates a default operation, and the default operation is the merge operation.

```
               <rpc message-id="101"
                     xmlns="urn:ietf:params:xml:ns:netconf:base:1.0"
                     xmlns:ol="urn:changjia:params:xml:ns:yang:optimistic-locking">
                 <edit-config>
                    <target>
                      <running ol:revision="1"/>
                    </target>
                    <config>
                      <top xmlns="http://example.com/schema/1.2/config">
                        <interface xc:operation="merge">
                          <name>Ethernet0/0</name>
                          <mtu>1500</mtu>
                        </interface>
                      </top>
                    </config>
                 </edit-config>
               </rpc>
```

An example in which the operation includes the commit operation and the version information is a version number (revision) is used. The commit operation defined by NETCONF is extended to carry the first version information. For example, in the following example, the operation indication information includes <commit ol:revision="2"/>, and <commit ol:revision="2"/> indicates a commit operation that the first client requests the network device to perform, indicate that the first data object is a running dataset, and indicate that a second data object is a candidate dataset; and further carries version information 2, of the running dataset, recorded by the first client. The commit operation is used to overwrite configuration data in the running dataset with configuration data in the candidate dataset to commit the configuration data in the candidate dataset for a formal effect.

```
               <rpc message-id="101"
                     xmlns="urn:ietf:params:xml:ns:netconf:base:1.0"
                     xmlns:ol ="um:changjia:params:xml:ns:yang:optimistic-locking">
                 <commit ol:revision="2"/>
               </rpc>
```

An example in which the operation includes the copy operation and the version information is a version number (revision) is used. The copy-config operation defined by NETCONF is extended to carry the first version information and the fifth version information. For example, corresponding version information attributes are added after identifiers of the first data object (destination data object) and the second data object (source data object) respectively. For example, in the following example, the operation indication information includes content in a <copy-config> parameter. <startup ol:revision="1"/> in the <target> parameter indicates that the first data object is a startup dataset, and that a version number, of the startup dataset, recorded by the first client is 1. <running ol:revision="2"/> in a <source> parameter indicates that the second data object is a running dataset, and that a version number, of the running dataset, recorded by the first client is 2. In addition, it may be further learned that, the <copy-config> parameter indicates a copy operation that the first client requests the network device to perform, the <target> parameter is used to carry the identifier of the first data object, and the <source> parameter is used to carry the identifier of the second data object.

```
               <rpc message-id="101"
                     xmlns="urn:ietf:params:xml:ns:netconf:base:1.0"
                     xmlns:ol="urn:changjia:params:xml:ns:yang:optimistic-locking">
                 <copy-config>
                    <target>
                      <startup ol:revision="1"/>
                    </target>
                    <source>
                      <running ol:revision="2"/>
                    </source>
                 </copy-config>
               </rpc>
```

It can be learned from the foregoing that the first client may alternatively first detect version information consistency before sending the configuration request message to the network device. When detecting version information consistency, the first client needs to first obtain the version information, of the first data object, recorded by the network device. The following describes two implementations in which the first client obtains the version information, of the first data object, recorded by the network device. It should be noted that, if version information consistency of the fifth data object further needs to be detected, the first client may separately obtain the version information of the first data object and the version information of the fifth data object that are recorded by the network device. The following describes this by using an example in which the first client obtains the version information, of the first data object, recorded by the network device. An implementation in which the first client obtains the version information, of the fifth data object, recorded by the network device is similar.

An implementation in which the first client obtains the version information, of the first data object, recorded by the network device is: The first client sends a query message to the network device, where the query message includes the identifier of the first data object. The network device receives the query message sent by the first client, and the network device sends a query response message to the first client, where the query response message includes the version information, of the first data object, recorded by the network device. That is, the first client obtains, in an instant query manner, the version information, of the first data object, recorded by the network device.

It should be noted that, the network device feeds back a success response message to the first client if the network device records the version information of the first data object, where the success response message is the query response message, and the query response message includes the version information, of the first data object, recorded by the network device. Optionally, the query response message includes a version field, and the version field includes the version information, of the first data object, recorded by the network device.

The network device feeds back a failure response message to the first client if the network device does not record the version information of the first data object, where the failure response message indicates that the network device does not record the version information of the first data object. Optionally, the failure response message also includes a version field, but the version field is null. The network device feeds back a failure response message to the first client if the first data object does not support setting of the access control function, or if the first data object supports setting of the access control function but the access control function is not set. Optionally, in different cases, failure response messages fed back by the network device are the same or different. For example, if the first data object does not support setting of the access control function, the failure response message fed back by the network device indicates that the first data object does not support setting of the access control function. If the first data object supports setting of the access control function but the access control function is not set, the failure response message fed back by the network device indicates that the first data object supports setting of the access control function but the access control function is not set.

For example, NETCONF is extended. For example, a get-revision operation is defined to be used by the client to query for version information, and parameters in the get-revision operation include a <source> parameter and a <filter> parameter. The <source> parameter is used to carry an identifier of a dataset, and the <filter> parameter is used to carry a name of a YANG module, a path of a data node, or a name of a data node in the dataset indicated by the <source> parameter. The <filter> parameter is an optional parameter. For example, if the first data object is a dataset, a <get-revision> parameter in a version query request message may include only the <source> parameter, to indicate the identifier of the first data object by using the <source> parameter. If the first data object is a YANG module or a data node, a <get-revision> parameter in a version query request message includes the <source> parameter and the <filter> parameter, to jointly indicate the identifier of the first data object by using the <source> parameter and the <filter> parameter. For example, in the following example, a query message sent by the first client to the network device carries the following information. Content in the <get-revision> parameter indicates that the first client requests to query the version information of the first data object, and the <get-revision> parameter includes the <source> parameter, indicating that the first data object is a dataset. <running/> in the <source> parameter indicates that the first data object is a running dataset. Optionally, the query message sent by the first client to the network device by using <get-revision> may be referred to as a version query message.

```
               <rpc message-id="101"
                     xmlns="um:ietf:params:xml:ns:netconf:base:1.0">
                 <get-revision>
                    <source>
                      <running/>
                    </source>
                </get-revision>
              </rpc>
```

For another example, in the following example, a query message sent by the first client to the network device carries the following information. Content in the <get-revision parameter indicates that the first client requests to query the version information of the first data object, and the <get-revision> parameter includes the <source> parameter and the <filter> parameter, indicating that the first data object is a YANG module or a data node in the dataset. <running/> in the <source> parameter indicates that the dataset to which the first data object belongs is a running dataset. A <top> parameter in the <filter> parameter indicates that the first data object is a /top/users data node in the running dataset.

```
               <rpc message-id="101"
                     xmlns="um:ietf:params:xml:ns:netconf:base:1.0">
                 <get-revision>
                    <source>
                      <running/>
                    </source>
              <filter type="subtree">
                      <top xmlns="http://example.com/schema/1.2/config">
                        <users/>
                      </top>
                    </filter>
                 </get-revision>
               </rpc>
```

If the network device records the version information of the first data object, a query response message fed back by the network device carries the following information. <revision>2<revision> is a version field, and the version field indicates that the version information, of the first data object, recorded by the network device is 2.

```
               <rpc-reply message-id="101"
                     xmlns="um:ietf:params:xml:ns:netconf:base:1.0">
                 <revision>2<revision>
               </rpc-reply>
```

If the network device does not record the version information of the first data object, a failure response message fed back by the network device carries the following information. <revision><revision> is null, indicating that the network device does not record the version information of the first data object.

```
               <rpc-reply message-id="101"
                 xmlns="um:ietf:params:xml:ns:netconf:base:1.0">
               <revision><revision>
            </rpc-reply>
```

The foregoing uses an extended get-revision operation as an example to describe how the first client obtains, by sending a query message, the version information, of the first data object, recorded by the network device. Optionally, the first client may alternatively obtain, by using <get-config> defined in NETCOF, the version information, of the first data object, recorded by the network device. <get-config> is used by the client or a controller to query the network device for configuration data on the network device. In this embodiment of this application, the query message sent by the first client to the network device includes a <get-config> parameter, and the <get-config> parameter carries the identifier of the first data object. The query response message fed back by the network device to the first client includes a <data> parameter, where the <data> parameter carries specific data of the first data object, and further carries the version information, of the first data object, recorded by the network device. Optionally, the first client may alternatively obtain, by using <get-data> or <get> defined in NETCOF, the version information, of the first data object, recorded by the network device, and a principle is similar to that of <get-config>. That is, in this embodiment of this application, a standard request message defined in NETCOF may alternatively be extended, and if the first client sends the query message to the network device to request to query the specific data in the first data object, the network device feeds back the specific data in the first data object to the first client, and further feeds back the version information, of the first data object, recorded by the network device. Optionally, the query message sent by the first client to the network device by using <get-config> may alternatively be referred to as a configuration query message.

It should be noted that, in this embodiment of this application, when expecting to perform configuration update on the first data object, the first client may obtain, in an instant query manner, the version information, of the first data object, recorded by the network device, or the first client may obtain, at any moment in an instant query manner, the version information, of the first data object, recorded by the network device. The first client may further query for version information of another data object in addition to querying for the version information of the first data object.

Optionally, the first client requests to query for version information of one or more data objects by sending a query message. In the foregoing several examples, one query message is used to request to query for version information of one data object. The following describes an implementation in which the first client requests to query for version information of a plurality of data objects by sending a query message.

<get-config> described in the foregoing is used as an example. For example, a query message sent by the first client carries the following information. A <get-revision> parameter carries a <source> parameter and a <filter> parameter. The <source> parameter indicates that a dataset in which a data object to be queried is located is a running dataset. The <filter> parameter indicates that data objects of which version information is requested to be queried include a plurality of data nodes that correspond to an interface name eth0 and that are included in the interfaceYANG module in the running dataset.

```
               <rpc message-id="101"
                     xmlns="um:ietf:params:xml:ns:netconf:base:1.0">
                 <get-config>
                    <source>
                      <running/>
                    </source>
                    <filter type="subtree">
                      <top xmlns="http://example.com/schema/1.2/config">
                        <t:interfaces>
                          <t:interface t:ifName="eth0"/>
                         </t: interfaces>
                      </t:top>
                 </filter>
               </get-config>
            </rpc>
```

If the network device records version information of the plurality of data nodes that correspond to ifName eth0 and that are included in the interfaceYANG module, a query response message fed back by the network device carries the following information. The query response message carries a <data> parameter, and the <data> parameter carries respective version information of four data nodes that correspond to an ifName interface name eth0 and that are included in the interfaceYANG module. <ifName ol:revision="1">eth0</ifName> indicates that version information of a data node whose interface name is eth0 is 1. <mtu ol:revision="3">1450</mtu> indicates that version information of a data node whose mtu (maximum transmission unit, maximum transmission unit) is 1450 is 3. <ip-address ol:revision="2">172.168.0. K/ip-address> indicates that version information of a data node whose ipv4-address is 172.168.0.1 is 2. <ip-address ol:revision="1">::1</ip-address> indicates that version information of a data node whose ipv6-address is ::1 is 1.

```
               <rpc-reply message-id="101"
                     xmlns="urn:ietf:params:xml:ns:netconf:base:1.0"
                     xmlns:ol="urn:changjia:params:xml:ns:yang:optimistic-locking">
                 <data>
                    <top xmlns="http://example.com/schema/1.2/stats">
                      <interfaces>
                        <interface>
                          <ifName ol:revision="1">eth0</ifName>
                          <mtu ol:revision="3">1450</mtu>
                          <ip-address ol:revision="2">172.168.0.1</ip-address>
                          <ip-address ol:revision="1">::1</ip-address>
                        </interface>
                      </interfaces>
                    </top>
                 </data>
               </rpc-reply>
```

If some data nodes in the four data nodes have version information, a query response message fed back by the network device to the first client carries the version information of the data nodes. For example, a query response message fed back by the network device carries the following information. A data node whose interface name is eth0 has version information 1, a data node whose maximum transmission unit mtu is 1450 has version information 3, and neither a data node whose ipv4-address is 172.168.0.1 nor a data node whose ipv6-address is ::1 has version information.

```
               <rpc-reply message-id="101"
                     xmlns="urn:ietf:params:xml:ns:netconf:base:1.0"
                     xmlns:ol="urn:changjia:params:xml:ns:yang:optimistic-locking">
                 <data>
                 <top xmlns="http://example.com/schema/1.2/stats">
                      <interfaces>
                        <interface>
                          <ifName ol:revision="1">eth0</ifName>
                          <mtu ol:revision="3">1450</mtu>
                          <ip-address>172.168.0. 1</ip-address>
                          <ip-address>:: 1</ip-address>
                        </interface>
                      </interfaces>
                   </top>
               </data>
           </rpc-reply>
```

In the foregoing several examples, the first client requests to query the version information by specifying a name of the data node. In this embodiment of this application, the first client may alternatively request to query the version information by specifying a path of the data node. For example, an xpath expression indicates the path of the data node.

For example, a query message sent by the first client carries the following information. A <filter> parameter carries an xpath expression, and the xpath expression indicates that the first client requests to query for version information of a plurality of data nodes that correspond to a user whose name is fred in a running dataset.

```
               <rpc message-id="101"
                     xmlns="um:ietf:params:xml:ns:netconf:base:1.0">
                 <get-revision>
                    <source>
                      <running/>
                    </source>
                    <!-- get the user named fred -->
                    <filter xmlns:t="http://example.com/schema/1.2/config"
                            type="xpath"
                            select="/t:top/t:users/t:user[t:name='fred'] "/>
                   </get-revision>
             </rpc>
```

Optionally, if version information of a plurality of data nodes belonging to one dataset or one YANG module is consistent, the query response message fed back by the network device to the first client may be attached with the version information after an identifier of a parent node of the plurality of data nodes, to indicate that all the plurality of data nodes inherit the version information of the parent node. In one case, the plurality of data nodes have version information and the version information is the same. In another case, the plurality of data nodes have no version information, and the version information of the plurality of data nodes is essentially the version information of the parent node of the plurality of data nodes.

For example, a query message sent by the first client to the network device carries the following information. <user ol:revision=" 1"> indicates that version information of a data node whose name is fred and a company-info data node with id=2 is inherited from version information 1 of a parent node user.

```
               <rpc-reply message-id="101"
                       xmlns="urn:ietf:params:xml:ns:netconf:base:1.0"
                       xmlns:ol="urn:changjia:params:xml:ns:yang:optimistic-locking">
                 <data>
                    <top xmlns="http://example.com/schema/1.2/config">
                      <users>
                        <user ol:revision=" 1 ">
                          <name>fred</name>
                          <company-info>
                            <id>2</id>
                          </company-info>
                       </user>
                     </users>
                 </top>
               </data>
            </rpc-reply>
```

The foregoing describes an implementation in which the first client obtains the version information of the first data object by sending the query message to the network device. In this embodiment of this application, another implementation in which the first client obtains the version information, of the first data object, recorded by the network device is: The network device sends a data change notification message to the first client, where the data change notification message includes the version information, of the first data object, recorded by the network device, and the data change notification message is sent by the network device if the first client subscribes to a change notification of data in the first data object. That is, the first client obtains, in a subscription manner, the version information, of the first data object, recorded by the network device, that is, obtains latest version information recorded by the network device. For example, if the network device modifies the data in the first data object based on a request of another client, that is, the data in the first data object is changed, the network device sends a data change notification message to the first client, where the data change notification message includes the latest version information, of the first data object, recorded by the network device.

Optionally, the first client sends a subscription request to the network device to subscribe to a change notification of configuration data in the first data object, the first client is set by default to subscribe to a change notification of configuration data in the first data object from the network device, or the network device pushes the data change notification message to the first client by default.

It should be noted that, the version information may be considered as a mark recording that the configuration data in the first data object is changed, and the version information of the first data object may change if the configuration data included in the first data object is changed (that is, configuration update is performed). In this case, the network device sends the data change notification message to the first client, where the data change notification message carries the version information, of the first data object, recorded by the network device. Optionally, the data change notification message further includes specific change information of the configuration data in the first data object.

In this embodiment of this application, the foregoing two implementations in which the first client obtains the version information, of the first data object, recorded by the network device may be used separately, or may be used in combination. This is not limited in this embodiment of this application. For example, in a case of combined use, the first client may obtain the version information by sending a version query request message to the network device at any time, or the first client may obtain the version information by receiving a configuration change push message sent by the network device.

Step 302: The network device receives the configuration request message.

In this embodiment of this application, the network device receives the configuration request message after the first client sends the configuration request message to the network device.

Step 303: The network device performs the operation on the first data object if the network device detects that the first version information is consistent with first reference version information, where the first reference version information is the version information, of the first data object, recorded by the network device.

In this embodiment of this application, after receiving the configuration request message, the network device detects whether the first version information is consistent with the first reference version information, that is, detects whether the version information recorded by the first client is consistent with the version information recorded by the network device. The network device performs the operation on the first data object if the network device detects that the first version information is consistent with the first reference version information. The first reference version information is version information, of the first data object, recorded by the network device.

It can be learned from the foregoing that, if the operation includes the copy operation, the operation indication information carried in the configuration request message further includes the fifth version information, where the fifth version information is the version information, of the fifth data object, recorded by the first client, the fifth data object includes the configuration data of the network device, and the fifth data object and the first data object are different data objects. In this case, the network device further needs to detect whether the fifth version information is consistent with fifth reference version information. The network device performs the operation on the first data object if the network device detects that the first version information is consistent with the first reference version information and the fifth version information is consistent with the fifth reference version information. The fifth reference version information is the version information, of the fifth data object, recorded by the network device.

It can be learned from the foregoing that the operation indication information carried in the configuration request message includes the identifier of the first data object. For example, operation indication information of the operations such as editing, deletion, and copying includes the identifier of the first data object (also referred to as a target data object), or the operation indication information carried in the configuration request message indicates the identifier of the first data object, where for example, the operation indication information of the commit operation indicates the identifier of the first data object (that is, the running dataset). Optionally, the network device queries an optimistic lock information base for the version information of the first data object based on the identifier of the first data object after receiving the configuration request message, where the version information found through query is the version information, of the first data object, recorded by the network device. Optionally, if the operation includes the copy operation, the operation indication information further includes an identifier of the fifth data object, and the network device queries the optimistic lock information base for the version information of the fifth data object based on the identifier of the fifth data object, where the version information found through query is the version information, of the fifth data object, recorded by the network device. The optimistic lock information base is used to store version information, a data object, recorded by the network device. The optimistic lock information base is stored by the network device, or stored by another device. This is not limited in this embodiment of this application. Optionally, the optimistic lock information base is an information base constructed based on a YANG model.

In this embodiment of this application, for an implementation in which the network device performs the operation on the first data object, refer to related descriptions of NETCONF. Details are not described herein again. The network device records the first reference version information after the network device completes performing the operation on the first data object. It should be noted that the network device needs to determine, based on a situation, whether to update the version information, of the first data object, recorded by the network device, that is, whether to update the first reference version information.

It should be noted that, it can be learned from the foregoing that, in this embodiment of this application, the data granularity that is of setting the access control function and that is supported by the network device includes one or more of the dataset granularity, the YANG module granularity, and the data node granularity, and the reverse selection mechanism parameter may be further set when access control protection is set for a data object, that is, there may be a parent-child relationship between data objects in this embodiment of this application, and a case in which a child data object is reversely selected or is not reversely selected from a parent data object may further exist between the data objects having the parent-child relationship. Based on this, after performing the operation on the first data object in this embodiment of this application, the network device determines, based on the supported data granularity of setting the access control function, the parent-child relationship between the data objects, and the reverse selection mechanism parameter, whether to update the version information, and how to update the version information.

In one case, the network device updates and records the first reference version information if a data granularity of the first data object corresponding to the first reference version information meets a data granularity at which the network device sets the access control function. That is, the network device maintains the version information of the first data object itself, and the network device needs to update and record the first reference version information after performing a configuration update operation on the first data object.

Optionally, if the operation indication information further includes the identifier of the second data object, the first data object is a child data object of the second data object, and second reference version information is version information, of the second data object, recorded by the network device, an implementation in which the network device records the first reference version information is: The network device updates and records the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function. It should be noted that, in this case, the access control function that is set by the network device may not support the reverse selection mechanism. In this way, the network device needs to update the version information of the first data object if data of the first data object changes, and the network device also needs to update the version information of the second data object if data of a parent data object (namely, the second data object) of the first data object changes due to the data change of the first data object.

Optionally, if the operation indication information further includes an identifier of a third data object, the first data object is a child data object of the third data object, third reference version information is version information, of the third data object, recorded by the network device, and the access control function that is set by the network device supports the reverse selection mechanism, an implementation in which the network device records the first reference version information is: The network device updates and records the first reference version information and the third reference version information if the data granularity of the first data object corresponding to the first reference version information meets the data granularity at which the network device sets the access control function, a data granularity of the third data object corresponding to the third reference version information meets the data granularity at which the network device sets the access control function, and the reverse selection mechanism parameter of the access control function that is set by the network device does not include the identifier of the first data object. The network device updates and records the first reference version information if the data granularity of the first data object corresponding to the first reference version information meets the data granularity at which the network device sets the access control function, a data granularity of the third data object corresponding to the third reference version information meets the data granularity at which the network device sets the access control function, and the reverse selection mechanism parameter of the access control function that is set by the network device includes the identifier of the first data object.

That is, if the access control function that is set by the network device supports the reverse selection mechanism, if the third data object is a parent data object of the first data object, and the data granularity of the first data object and the data granularity of the third data object both meet the data granularity at which the network device sets the access control function, that is, the data granularity at which the network device sets the access control function includes at least two data granularities, the network device not only updates the version information of the first data object, but further determines, depending on whether the reverse selection mechanism parameter includes the identifier of the first data object, whether to update the version information of the third data object after completing performing the operation on the first data object. If the reverse selection mechanism parameter does not include the identifier of the first data object, the network device updates the version information of the third data object after completing performing the operation on the first data object. If the reverse selection mechanism parameter includes the identifier of the first data object, the network device keeps the version information of the third data object unchanged after completing performing the operation on the first data object.

Optionally, in this case, the operation indication information further includes an identifier of a third data object, the third data object is a parent data object of the first data object, and both a data granularity of the third data object and the data granularity of the first data object meet the data granularity at which the network device sets the access control function. That is, the third data object includes the first data object, and the data granularity of the first data object is less than the data granularity of the third data object. In this case, the network device records version information of the third data object and the version information of the first data object. That is, the third data object is an upper-level data object or the parent data object of the first data object, and both the third data object and the first data object have version information. Therefore, in addition to updating the version information of the first data object, the network device further needs to determine, depending on whether the reverse selection mechanism parameter includes the identifier of the first data object, whether to update the version information of the third data object after completing performing the operation on the first data object. If the reverse selection mechanism parameter does not include the identifier of the first data object, when the operation performed by the network device on the first data object causes a change of the first data object, and further causes a change of the parent data object (namely, the third data object) of the first data object, the network device needs to update the version information of the third data object in this case because the first data object is not set to be reversely selected from the third data object. If the reverse selection mechanism parameter includes the identifier of the first data object, when the operation performed by the network device on the first data object causes a change of the first data object, because the first data object is set to be reversely selected from the third data object, indicating that the network device does not need to record a change of the third data object caused by the first data object, the network device keeps the version information of the third data object unchanged in this case if data objects other than the first data object in the third data object is not changed even though the first data object is changed. That is, in this embodiment of this application, if the third data object is the parent data object of the first data object, and the reverse selection mechanism parameter corresponding to the third data object includes the identifier of the first data object, the network device does not update the version information of the third data object even through configuration update is performed on the first data object. Simply, the first data object is reversely selected from the third data object, and the configuration update on the first data object does not affect the version information of the third data object.

For example, when the NETCONF configuration request message sent by the first client and received by the network device includes the operation indication information, the operation indication information indicates that the first client requests the network device to perform an operation on a "name" node in a YANG module whose name is ietf-interface-desc, the YANG module of ietf-interface-desc is the third data object, a type or the data granularity of the third data object is a YANG module, the "name" node is the first data object, and a type or the data granularity of the first data object is a data node. It is assumed that the data granularity that is of setting the access control function and that is supported by the network device includes the YANG module and the data node, and the network device records version information of the YANG module of ietf-interface-desc and version information of the "name" node. In this case, the network device updates the version information of the "name" node after performing the operation on the "name" node. In addition, the network device keeps the version information of the YANG module of ietf-interface-desc unchanged if the reverse selection mechanism parameter includes an identifier of the "name" node. The network device updates the version information of the YANG module of ietf-interface-desc if the reverse selection mechanism parameter does not include an identifier of the "name" node.

It should be noted that, in this case, that is, if a parent-child relationship exists between the third data object and the first data object, and the data granularity of the first data object and the data granularity of the third data object both meet the data granularity at which the network device sets the access control function, if the network device in this embodiment of this application does not support setting the reverse selection mechanism parameter, after performing the operation on the first data object to perform configuration update, the network device separately updates the version information of the first data object and the version information of the third data object.

For example, it is assumed that the first data object is a data node, the third data object is a dataset, the dataset includes the data node, a data granularity of the data node and a data granularity of the dataset both meet the data granularity at which the network device sets the access control function, and the network device separately records version information of the data node and version information of the dataset. In this case, if a reverse selection mechanism parameter corresponding to the dataset includes an identifier of the data node, after the network device performs an operation on the data node to perform configuration update, the network device updates the version information of the data node, and keeps the version information of the dataset unchanged. If a reverse selection mechanism parameter corresponding to the dataset does not include an identifier of the data node, or the network device does not support setting the reverse selection mechanism parameter, after the network device performs an operation on the data node to perform configuration update, the network device separately updates the version information of the data node and the version information of the dataset.

In another case, the data granularity of the first data object does not meet the data granularity at which the network device sets the access control function, the third data object is a parent data object of the first data object, and a data granularity of the third data object meets the data granularity at which the network device sets the access control function, that is, the parent data object of the first data object has version information. In this case, the network device needs to determine, depending on whether the identifier of the first data object is set to the reverse selection mechanism parameter, whether to update the version information of the third data object after completing performing the operation on the first data object. The network device keeps the version information of the third data object unchanged if the reverse selection mechanism parameter includes the identifier of the first data object. The network device updates the version information of the third data object if the reverse selection mechanism parameter does not include the identifier of the first data object.

For example, the network device supports setting of the access control function for a data object of one data granularity. It is assumed that the network device does not support setting of the access control function for a data node, but supports setting of the access control function for a dataset, the first data object is a data node, the third data object is a dataset, and the third data object is a parent data object of the first data object. In this case, the network device records version information of the third data object, and the first data object itself does not have version information. That is, it is assumed that the first data object is a data node, the third data object is a dataset, the dataset is a parent data object of the data node, a data granularity of the data node does not meet the data granularity at which the network device sets the access control function, and a data granularity of the dataset meets the data granularity at which the network device sets the access control function. In addition, the network device records version information of the dataset, but the data node itself does not have version information. If a reverse selection mechanism parameter corresponding to the dataset includes an identifier of the data node, after the network device performs an operation on the data node to perform configuration update, the network device keeps the version information of the dataset unchanged. If a reverse selection mechanism parameter corresponding to the dataset does not include an identifier of the data node, after the network device performs an operation on the data node to perform configuration update, the network device updates the version information of the dataset.

For example, when the NETCONF configuration request message sent by the first client and received by the network device includes the operation indication information, the operation indication information indicates that the first client requests the network device to perform an operation on a "name" node in a YANG module whose name is ietf-interface-desc. It is assumed that a data granularity that is of setting the access control function and that is supported by the network device includes a YANG module, and the network device records version information of the YANG module of ietf-interface-desc. In this case, after the network device performs the operation on the "name" node, the network device keeps the version information of the YANG module of ietf-interface-desc unchanged if the reverse selection mechanism parameter includes an identifier of the "name" node. The network device updates the version information of the YANG module of ietf-interface-desc if the reverse selection mechanism parameter does not include an identifier of the "name" node.

Optionally, if the network device stores the version information of the data object by using the optimistic lock information base, the network device updates the version information of the first data object by updating the optimistic lock information base, or updates the version information of the first data object and the version information of the third data object. Optionally, the reverse selection mechanism parameter is stored in the optimistic lock information base, and the network device queries the optimistic lock information base for the reverse selection mechanism parameter, and determines whether the reverse selection mechanism parameter includes the identifier of the first data object.

For example, if the version information is a version number, and the version number is in a numeral format, an implementation in which the network device updates the first reference version information is: obtaining updated first reference version information by adding 1 to the first reference version information. If the version number is a version number, the version number is in a naming format of major version number, subversion number. minor version number, and an implementation in which the network device updates the first reference version information is: obtaining the updated first reference version information by adding 1 to the major version number, the subversion number, or the minor version number of the first reference version information. If the version information is a timestamp, an implementation in which the network device updates the first reference version information is: The network device updates system time at which performing the operation on the first data object is completed to the first reference version information, the network device updates system time at which the operation is started to be performed on the first data object to the first reference version information, or the network device updates system time at which the configuration request message is received to the first reference version information. That is, the first reference version information is system time, at which the network device completes performing the operation on the first data object, recorded by the network device, the first reference version information is system time, at which the network device starts to perform the operation on the first data object, recorded by the network device, or the first reference version information is time, at which the network device receives the configuration request message, recorded by the network device. If the version information is in another form, a manner in which the network device updates the first reference version information may be adaptively changed.

Optionally, if the operation that the first client requests the network device to perform is a commit operation, after the network device commits the configuration data in the candidate dataset to the running dataset, the network device needs to update the version information of the running dataset because the configuration data in the running dataset is modified. It is assumed that the network device updates the version information in an accumulation manner. After the network device performs the commit operation, in an implementation, the network device adds 1 to the version information of the running dataset to obtain updated version information, and in another implementation, the network device resets the version information of the running dataset to the initial version information value.

In this embodiment of this application, after performing the operation on the first data object, the network device can further send a configuration success response message to the first client, to notify the first client that the operation is successfully performed. Correspondingly, after the first client sends the configuration request message to the network device, the first client further receives a configuration success response message sent by the network device.

Optionally, after the first client receives the configuration success response message sent by the network device, the first client records the first version information, that is, updates and records the version information, of the first data object, recorded by the first client. It should be noted that the first client may immediately automatically update the first version information, or may subsequently update the first version information by querying the network device for the version information, of the first data object, recorded by the network device. That is, an implementation in which the first client updates the first version information is not limited in this embodiment of this application.

For example, in an implementation, after the first client sends the configuration request message to the network device for a period of time, the first client sends a query message to the network device to query for latest version information of the first data object. The network device receives the query message sent by the first client, where the query message includes the identifier of the first data object. The network device sends a query response message to the first client, where the query response message includes the version information, of the first data object, recorded by the network device, that is, the network device notifies the first client of the updated version information of the first data object. In this way, after the first client obtains the updated version information of the first data object, if finding that the version information of the first data object changes, the first client determines that the network device successfully performs the operation on the first data object. Simply, in this embodiment of this application, the first client may obtain the version information through query, to verify whether the network device successfully performs the operation or completes the operation on the first data object.

In another implementation, the configuration success response message sent by the network device to the first client includes the updated first reference version information. In this case, the first client updates and records the first version information as the updated first reference version information.

For example, a configuration success response message sent by the network device to the first client carries the following information. <ok/> indicates that the network device successfully performs the operation on the first data object, that is, the network device successfully performs configuration update. Optionally, <ok/> may be replaced with <ok ol:revision="4"/>, to indicate that the updated first reference version information is 4.

```
               <rpc-reply message-id="101"
                     xmlns="urn:ietf:params:xml:ns:netconf:base:1.0">
                 <ok ol:revision="4"/>
              </rpc-reply>
```

In this embodiment of this application, the network device sends a configuration failure response message to the first client if the network device detects that the first version information is inconsistent with the first reference version information. The network device sends the configuration failure response message to the first client if the operation is a copy operation, and the network device detects that the first version information is inconsistent with the first reference version information, or the network device detects that the fifth version information is inconsistent with the fifth reference version information. That is, if the version information maintained by the first client is inconsistent with the version information maintained by the network device, the network device does not perform the operation on the first data object, and feeds back the configuration failure response message to the first client.

Optionally, the configuration failure response message sent by the network device to the first client includes the first reference version information, that is, the network device may notify the first client of the version information, of the first data object, recorded by the network device.

For example, a configuration failure response message sent by the network device to the first client carries the following information. Content in a <rpc-error> parameter indicates a configuration failure, an <error-info> parameter carries a cause of the configuration failure, and a <message> parameter carries the first reference version information 2 recorded by the network device.

```
               <rpc-reply xmlns="urn:ietf:params:xml:ns:netconf:base: 1.0">
                 <rpc-error>
                    <error-type>rpc</error-type>
                    <error-tag>bad-attribute</error-tag>
                    <error-severity>error</error-severity>
                    <error-info>
                      <bad-attribute>target-revision</bad-attribute>
                      <message>the current target-revision is 2</message>
                   </error-info>
                </rpc-error>
              </rpc-reply>
```

The foregoing provides a description that in a process in which the first client performs configuration update on the network device, the network device determines whether to perform configuration update by detecting version information consistency. Next, the configuration update method described in the embodiment in FIG. 3 is described again by using an example by referring to FIG. 4.

In FIG. 4, it is assumed that a network device detects version information consistency. Version information is a version number that is updated through accumulation. Both a client A and a client B may perform configuration update on the network device.

At a moment t1, the client A sends a configuration request message to the network device, where the configuration request message indicates to perform an edit operation on a first data object, and carries first version information 1 recorded by the client A, that is, V = 1. After receiving the configuration request message, the network device finds, through query, that first reference version information recorded by the network device is 1, that is, V = 1, and determines, through comparison, that the first version information is consistent with the first reference version information. In this case, the network device accepts the request of the client A, and successfully performs the edit operation to perform configuration update, and after successfully performing configuration update, the network device updates the recorded first reference version information to 2, that is, V = 2. At a moment t2, the network device sends a configuration success response message to the client A, where the configuration success response message indicates successful configuration and carries the updated first reference version information, that is, V = 2. The client A updates the first version information recorded by the client A to 2.

At a moment t3, the client B sends a configuration request message to the network device, where the configuration request message indicates to perform an edit operation on the data object, and carries first version information 2 recorded by the client B, that is, V = 2. After receiving the configuration request message, the network device finds, through query, that the first reference version information recorded by the network device is 2, that is, V = 2, and determines, through comparison, that the first version information is consistent with the first reference version information. In this case, the network device accepts the request of the client B, successfully performs the edit operation to perform configuration update, and after successfully performing configuration update, the network device updates the recorded first reference version information to 3, that is, V = 3. At a moment t4, the network device sends a configuration success response message to the client B, where the configuration success response message indicates successful configuration and carries the updated first reference version information, that is, V = 3.

After the moment t2, the client A edits configuration data at a local end, to expect to update configuration data in the first data object again. At a moment t5, the client A further sends a configuration request message to the network device, where the configuration request message indicates to perform an edit operation on the data object, and carries the first version information 2 recorded by the client A, that is, V = 2. After receiving the configuration request message, the network device finds, through query, that the first reference version information recorded by the network device is 3, that is, V = 3, and determines, through comparison, that the first version information is inconsistent with the first reference version information. In this case, the network device rejects the request of the client A. At a moment t6, the network device sends a configuration failure response message to the client A, where the configuration failure response message indicates a configuration failure and carries currently recorded first reference version information, that is, V = 3.

The foregoing describes a method in which a client performs configuration update on a network device based on NETCONF. The network device participates in detecting version information consistency. This can greatly avoid configuration update conflicts. In addition, it can be learned that this embodiment of this application provides a complete access control mechanism to reduce configuration conflicts. The access control mechanism provided in this embodiment of this application includes optimistic lock capability notification, lock protection addition and deletion, maintenance and query of optimistic lock information (that is, the version information), and application of an optimistic lock during configuration update (that is, detecting version information consistency). During specific implementation, this solution may be implemented by extending NETCONF, for example, defining a new RPC operation, such as a get-revision operation and a set-ol-capability operation, and modifying an original RPC operation, for example, adding a <capability> parameter to a hello message to notify an optimistic lock support capability. It should be noted that some specific implementations described above are not intended to limit this application, and this solution may alternatively be implemented between the client and the network device in some other possible implementations.

In conclusion, in this embodiment of this application, when a client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

FIG. 5 is a flowchart of another configuration update method according to an embodiment of this application. In the embodiment in FIG. 5, the client separately detects version information consistency. Refer to FIG. 5. The method includes the following steps.

Step 501: A first client sends a NETCONF configuration request message to a network device if the first client detects that first version information is consistent with first reference version information, where the first version information is version information, of a first data object, recorded by the first client, the first reference version information is version information, of the first data object, recorded by the network device, the configuration request message includes operation indication information, and the operation indication information indicates that the first client requests the network device to perform an operation on the first data object.

In this embodiment of this application, when the first client expects to perform configuration update on the network device, the first client first detects whether the first version information is consistent with the first reference version information, where the first version information is the version information, of the first data object, recorded by the first client, and the first reference version information is the version information, of the first data object, recorded by the network device. The first client sends a configuration request message to the network device if the first client detects that the first version information is consistent with the first reference version information. The configuration request message includes the operation indication information, and the operation indication information indicates that the first client requests the network device to perform an operation on the first data object.

It can be learned from the foregoing that, when detecting version information consistency, the first client needs to first obtain the version information, of the first data object, recorded by the network device. The following describes two implementations in which the first client obtains the version information, of the first data object, recorded by the network device.

An implementation in which the first client obtains the version information, of the first data object, recorded by the network device is: The first client sends a query message to the network device, where the query message includes the identifier of the first data object. The first client receives a query response message sent by the network device, where the query response message includes the version information, of the first data object, recorded by the network device. That is, the first client obtains, in an instant query manner, the version information, of the first data object, recorded by the network device.

Another implementation in which the first client obtains the version information, of the first data object, recorded by the network device is: The first client receives a data change notification message sent by the network device, where the data change notification message includes the version information, of the first data object, recorded by the network device, and the data change notification message is received if the first client subscribes to a change notification of configuration data in the first data object. That is, the first client obtains, in a subscription manner, the version information, of the first data object, recorded by the network device.

The foregoing two implementations are consistent with related content in step 301 in the embodiment in FIG. 3. For the two implementations in which the first client obtains the version information, of the first data object, recorded by the network device in step 501, refer to the related descriptions in step 301. Details are not described herein again.

The first client may suspend configuration update if the first client detects that the first version information is inconsistent with the first reference version information. The network device does not accept the request of the first client even if the first client still sends the configuration request message to the network device in this case.

Step 502: The network device receives the configuration request message, and performs the operation on the first data object.

In this embodiment of this application, if the network device receives the configuration request message sent by the first client, it indicates that the first client has detected that the first version information is consistent with the first reference version information. In this case, the network device may not need to detect version information consistency, and the network device performs a corresponding operation on the first data object based on the operation indication information included in the configuration request message.

It should be noted that, in this case, a probability that the network device successfully performs the operation is relatively high. However, in some cases, the network device may fail to perform configuration update. For example, due to a cause such as processing efficiency or a network delay, there is a relatively long time interval between a moment at which the first client detects version information consistency and a moment at which the network device receives the configuration request message. In this time interval, the network device may accept a request of another client and modify the configuration data in the first data object. In this case, the first reference version information obtained by the first client is not latest version information recorded by the network device. Alternatively, the network device may fail to perform configuration update due to a cause such as a fault of the network device, an incorrect operation requested by the first client, or the like.

It should be further noted that, the implementation in which the first client separately detects version information consistency described in the embodiment in FIG. 5 differs from the embodiment in FIG. 3 only in that an execution body for detecting version information consistency is different. Other content described in the embodiment in FIG. 3 is also applicable to the embodiment in FIG. 5, and is not described again in FIG. 5.

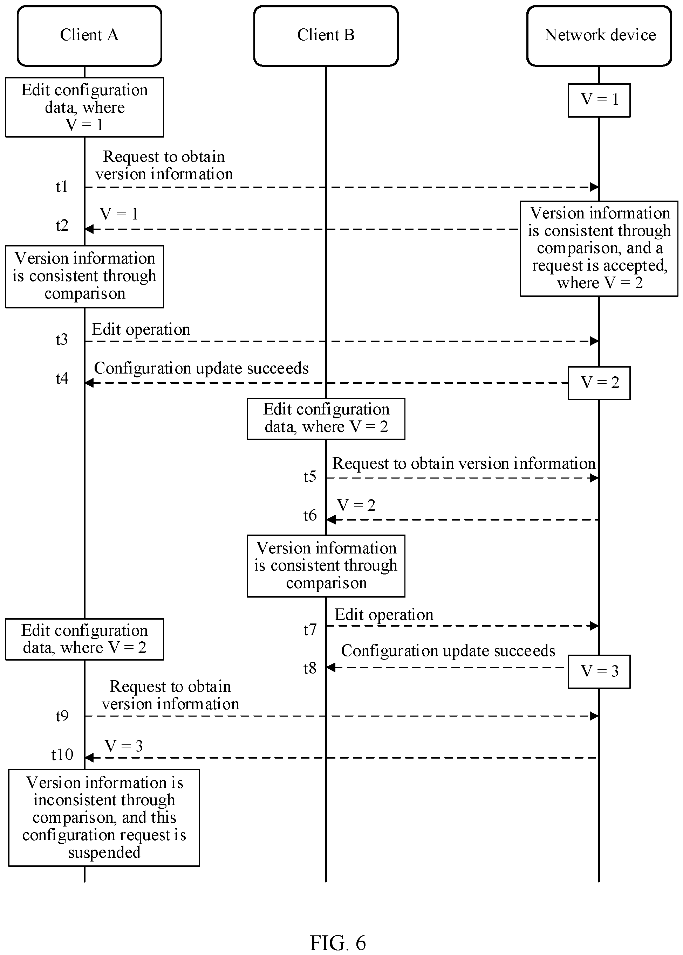

Next, the configuration update method described in the embodiment in FIG. 5 is described again by using an example by referring to FIG. 6.

In FIG. 6, it is assumed that the first client detects version information consistency. Version information is a version number that is updated through accumulation. Both a client A and a client B may perform configuration update on a network device.

The client A edits configuration data at a local end, to expect to modify configuration data in the first data object of the network device. First version information recorded by the client A is 1, that is, V = 1. At a moment t1, the client A requests to obtain first reference version information (for example, through a get-revision operation) from the network device. At a moment t2, first reference version information fed back by the network device to the client A is 1, that is, V = 1. The client A determines, through comparison, that the first version information is consistent with the first reference version information. In this case, the client A sends a configuration request message to the network device at a moment t3, where the configuration request message indicates to perform an edit operation on the first data object. After receiving the configuration request message, the network device performs a configuration operation on the first data object to perform configuration update, and after successfully performing configuration update, the network device updates the recorded first reference version information to 2, that is, V = 2. At a moment t4, the network device sends a configuration success response message to the client A, where the configuration success response message indicates successful configuration. After receiving the configuration success response message, the client A may update the first version information recorded by the client A to 2.

The client B edits configuration data at a local end, to expect to modify the configuration data in the first data object of the network device. First version information recorded by the client B is 2, that is, V = 2. At a moment t5, the client B requests to obtain first reference version information (for example, through a get-revision operation) from the network device. At a moment t6, first reference version information fed back by the network device to the client B is 2, that is, V = 2. If the client B determines, through comparison, that the first version information is consistent with the first reference version information, the client B sends a configuration request message to the network device at a moment t7, where the configuration request message indicates to perform an edit operation on the first data object. After receiving the configuration request message, the network device performs a configuration operation on the first data object to perform configuration update, and after successfully performing configuration update, the network device updates the recorded first reference version information to 3, that is, V = 3. At a moment t8, the network device sends a configuration success response message to the client B, where the configuration success response message indicates successful configuration.

The client A edits configuration data at the local end again, to expect to modify the configuration data in the first data object of the network device. First version information recorded by the client A at this time is 2, that is, V = 2. At a moment t9, the client A requests to obtain first reference version information (for example, through a get-revision operation) from the network device. At a moment 110, first reference version information fed back by the network device to the client A is 3, that is, V = 3. If the client A determines, through comparison, that the first version information is inconsistent with the first reference version information, the client A suspends a current configuration request.

In conclusion, in this embodiment of this application, when a client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

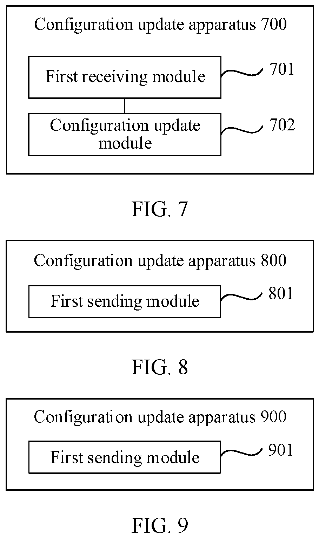

FIG. 7 is a schematic diagram of a structure of a configuration update apparatus 700 according to an embodiment of this application. The configuration update apparatus 700 may be implemented as a part or all of a communication device by using software, hardware, or a combination thereof. The communication device may be the network device in the embodiments in FIG. 1 to FIG. 6. In this embodiment of this application, the apparatus 700 is used for a network device. Refer to FIG. 7. The apparatus 700 includes a first receiving module 701 and a configuration update module 702.

The first receiving module 701 is configured to receive a network configuration protocol NETCONF configuration request message sent by a first client, where the NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device.

The configuration update module 702 is configured to perform the operation on the first data object if the network device detects that the first version information is consistent with first reference version information, where the first reference version information is version information, of the first data object, recorded by the network device.

Optionally, the NETCONF configuration request message is sent if the first client detects that the first version information is consistent with the first reference version information.

Optionally, the apparatus 700 further includes:
a second receiving module, configured to receive a query message sent by the first client, where the query message includes an identifier of the first data object; and
a first sending module, configured to send a query response message to the first client, where the query response message includes the version information, of the first data object, recorded by the network device.

Optionally, the apparatus 700 further includes:
a second sending module, configured to send a data change notification message to the first client, where the data change notification message includes the version information, of the first data object, recorded by the network device, and the data change notification message is sent by the network device if the first client subscribes to a change notification of data in the first data object.

Optionally, the version information includes a timestamp, and the first reference version information is system time, at which the network device completes performing the operation on the first data object, recorded by the network device, or the first reference version information is system time, at which the network device starts to perform the operation on the first data object, recorded by the network device.

Optionally, the apparatus 700 further includes:
a processing module, configured to complete performing the operation on the first data object; and
a recording module, configured to record the first reference version information.

Optionally, the recording module includes:
a first recording submodule, configured to update and record the first reference version information if a data granularity of the first data object corresponding to the first reference version information meets a data granularity at which the network device sets an access control function.

Optionally, the operation indication information further includes an identifier of a second data object, the first data object is a child data object of the second data object, and second reference version information is version information, of the second data object, recorded by the network device.

The recording module includes:
a second recording submodule, configured to update and record the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function.

Optionally, the operation indication information further includes an identifier of a third data object, the first data object is a child data object of the third data object, third reference version information is version information, of the third data object, recorded by the network device, and the access control function that is set by the network device supports a reverse selection mechanism.

The recording module includes:
a third recording submodule, configured to update and record the first reference version information and the third reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device does not include the identifier of the first data object; and
a fourth recording submodule, configured to update and record the first reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device includes the identifier of the first data object.

Optionally, the apparatus 700 further includes:
a third receiving module, configured to receive an access control function setting request message sent by the first client, where the access control function setting request message includes the identifier of the first data object;
a setting module, configured to set an initial version information value for the first data object based on the identifier of the first data object if the network device determines, based on the identifier of the first data object, that the first data object meets an access control function setting condition; and
a third sending module, configured to send a setting success response message to the first client, where the setting success response message indicates the first client to record the version information of the first data object.

Optionally, the setting success response message includes the initial version information value, or the setting success response message indicates the first client to set the initial version information value for the first data object.

Optionally, the access control function setting condition includes: The network device supports setting of the access control function, and the first data object does not have version information.

Optionally, the access control function setting condition further includes: the data granularity of the first data object meets a data granularity that is of setting the access control function and that is supported by the network device.

Optionally, the access control function setting request message further includes a reverse selection mechanism parameter, where the reverse selection mechanism parameter includes an identifier of one or more fourth data objects, and the fourth data object is a child data object of the first data object.

Optionally, the apparatus 700 further includes:
a fourth receiving module, configured to receive an access control function setting deletion request message sent by the first client, where the access control function setting deletion request message includes the identifier of the first data object; and
a deletion module, configured to delete the version information of the first data object based on the identifier of the first data object if the network device determines, based on the identifier of the first data object, that the first data object meets an access control function setting deletion condition.

Optionally, the access control function setting deletion condition includes: The network device supports setting of the access control function, and the network device records the version information of the first data object.

Optionally, the apparatus 700 further includes:
a fourth sending module, configured to send a capability notification message to the first client, where the capability notification message includes a support capability parameter of the access control function, and the support capability parameter indicates whether the network device supports setting of the access control function.

Optionally, the capability notification message further includes a support granularity parameter of the access control function, the support granularity parameter indicates that the network device supports the data granularity of setting the access control function, and the data granularity includes one or more of a dataset granularity, a YANG module granularity, and a data node granularity.

Optionally, the operation includes a copy operation, the operation indication information further includes fifth version information, the fifth version information is version information, of a fifth data object, recorded by the first client, the fifth data object includes configuration data of the network device, and the copy operation is used to overwrite configuration data in the first data object with the configuration data in the fifth data object.

The configuration update module 702 includes:
a configuration update submodule, configured to perform the operation on the first data object if the network device detects that the first version information is consistent with the first reference version information and the fifth version information is consistent with fifth reference version information, where the fifth reference version information is version information, of the fifth data object, recorded by the network device.

In this embodiment of this application, when a specific client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

It should be noted that, during configuration update performed by the configuration update apparatus provided in the foregoing embodiment, division of the foregoing functional modules is merely used as an example for description. During actual application, the foregoing functions may be allocated to different functional modules for implementation according to a requirement, that is, an internal structure of the apparatus is divided into different functional modules, to implement all or some of the functions described above. In addition, the configuration update apparatus provided in the foregoing embodiment and the configuration update method embodiment belong to a same concept. For a specific implementation process, refer to the method embodiment. Details are not described herein again.

FIG. 8 is a schematic diagram of a structure of a configuration update apparatus 800 according to an embodiment of this application. The configuration update apparatus 700 may be implemented as a part or all of a communication device by using software, hardware, or a combination thereof. The communication device may be the first client in the embodiments in FIG. 1 to FIG. 6. In this embodiment of this application, the apparatus 800 is used for a first client. Refer to FIG. 8. The apparatus 800 includes a first sending module 801.

The first sending module 801 is configured to send a network configuration protocol NETCONF configuration request message to a network device, where the NETCONF configuration request message includes operation indication information, the operation indication information indicates that the first client requests the network device to perform an operation on a first data object, the operation indication information includes first version information, the first version information is version information, of the first data object, recorded by the first client, and the first data object includes configuration data of the network device.

The configuration request message indicates, if the network device detects that the first version information is consistent with first reference version information, the network device to perform the operation on the first data object, where the first reference version information is version information, of the first data object, recorded by the network device.

Optionally, the apparatus 800 further includes:
a receiving module, configured to receive a configuration success response message sent by the network device; and
a recording module, configured to record first version information.

Optionally, the configuration success response message includes updated first reference version information.

The recording module includes:
a recording submodule, configured to update and record the first version information as the updated first reference version information.

In this embodiment of this application, when a specific client performs configuration update on a network device, the client may send a NETCONF configuration request message to the network device without locking a data object; and the network device performs configuration update on the data object if the network device detects that version information, of the data object, respectively recorded by the client and the network device is consistent. Alternatively, the client sends a NETCONF configuration request message to the network device if detecting that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

It should be noted that, during configuration update performed by the configuration update apparatus provided in the foregoing embodiment, division of the foregoing functional modules is merely used as an example for description. During actual application, the foregoing functions may be allocated to different functional modules for implementation according to a requirement, that is, an internal structure of the apparatus is divided into different functional modules, to implement all or some of the functions described above. In addition, the configuration update apparatus provided in the foregoing embodiment and the configuration update method embodiment belong to a same concept. For a specific implementation process, refer to the method embodiment. Details are not described herein again.

FIG. 9 is a schematic diagram of a structure of a configuration update apparatus 900 according to an embodiment of this application. The configuration update apparatus 900 may be implemented as a part or all of a communication device by using software, hardware, or a combination thereof. The communication device may be the first client in the embodiments in FIG. 1 to FIG. 6. In this embodiment of this application, the apparatus is used for a first client. Refer to FIG. 9. The apparatus 900 includes a first sending module 901.

The first sending module 901 is configured to send a network configuration protocol NETCONF configuration request message to a network device if the first client detects that first version information is consistent with first reference version information.

The first version information is version information, of a first data object, recorded by the first client, the first reference version information is version information, of the first data object, recorded by the network device, the NETCONF configuration request message includes operation indication information, and the operation indication information indicates that the first client requests the network device to perform an operation on the first data object.

Optionally, the apparatus 900 further includes:
a second sending module, configured to send a query message to the network device, where the query message includes an identifier of the first data object; and
a first receiving module, configured to receive a query response message sent by the network device, where the query response message includes the version information, of the first data object, recorded by the network device.

Optionally, the apparatus 900 further includes:
a second receiving module, configured to receive a data change notification message sent by the network device, where the data change notification message includes the version information, of the first data object, recorded by the network device, and the data change notification message is received if the first client subscribes to a change notification of data in the first data object.

In this embodiment of this application, when a specific client performs configuration update on the network device, the client may send a NETCONF configuration request message to the network device if the client does not lock the data object and detects that version information, of the data object, respectively recorded by the client and the network device is consistent. In this way, the client does not need to lock the data object on which the configuration update needs to be performed, thereby improving concurrency control efficiency and reducing configuration conflicts between a plurality of clients, that is, impact on another client is relatively small.

It should be noted that, during configuration update performed by the configuration update apparatus provided in the foregoing embodiment, division of the foregoing functional modules is merely used as an example for description. During actual application, the foregoing functions may be allocated to different functional modules for implementation according to a requirement, that is, an internal structure of the apparatus is divided into different functional modules, to implement all or some of the functions described above. In addition, the configuration update apparatus provided in the foregoing embodiment and the configuration update method embodiment belong to a same concept. For a specific implementation process, refer to the method embodiment. Details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like. It should be noted that, the computer-readable storage medium mentioned in this embodiment of this application may be a non-volatile storage medium, or in other words, may be a non-transitory storage medium.

It should be understood that "at least one" mentioned in this specification means one or more and "a plurality of' means two or more. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

The foregoing descriptions are merely embodiments of this application, but are not intended to limit this application. Any modification, equivalent replacement, or improvement made without departing from the spirit and principle of this application should fall within the protection scope of this application.

## Claims

1. A configuration update method, wherein the method comprises:
receiving, by a network device, a network configuration protocol NETCONF configuration request message sent by a first client, wherein the NETCONF configuration request message comprises operation indication information, the operation indication information indicates that the first client requests the network device to perform an operation on a first data object, the operation indication information comprises first version information, the first version information is version information, of the first data object, recorded by the first client, and the first data object comprises configuration data of the network device; and
performing, by the network device, the operation on the first data object if the network device detects that the first version information is consistent with first reference version information, wherein the first reference version information is version information, of the first data object, recorded by the network device.

2. The method according to claim 1, wherein the NETCONF configuration request message is sent if the first client detects that the first version information is consistent with the first reference version information.

3. The method according to claim 2, wherein the method further comprises:
receiving, by the network device, a query message sent by the first client, wherein the query message comprises an identifier of the first data object; and
sending, by the network device, a query response message to the first client, wherein the query response message comprises the version information, of the first data object, recorded by the network device.

4. The method according to claim 2 or 3, wherein the method further comprises:
sending, by the network device, a data change notification message to the first client, wherein the data change notification message comprises the version information, of the first data object, recorded by the network device, and the data change notification message is sent by the network device if the first client subscribes to a change notification of data in the first data object.

5. The method according to any one of claims 1 to 4, wherein the version information comprises a timestamp, and the first reference version information is system time, at which the network device completes performing the operation on the first data object, recorded by the network device, or the first reference version information is system time, at which the network device starts to perform the operation on the first data object, recorded by the network device.

6. The method according to any one of claims 1 to 5, wherein the method further comprises:
completing, by the network device, performing the operation on the first data object; and
recording, by the network device, the first reference version information.

7. The method according to claim 6, wherein the recording, by the network device, the first reference version information comprises:
updating and recording, by the network device, the first reference version information if a data granularity of the first data object corresponding to the first reference version information meets a data granularity at which the network device sets an access control function.

8. The method according to claim 6, wherein the operation indication information further comprises an identifier of a second data object, the first data object is a child data object of the second data object, and second reference version information is version information, of the second data object, recorded by the network device; and the recording, by the network device, the first reference version information comprises:
updating and recording, by the network device, the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function.

9. The method according to claim 6, wherein the operation indication information further comprises an identifier of a third data object, the first data object is a child data object of the third data object, third reference version information is version information, of the third data object, recorded by the network device, and an access control function that is set by the network device supports a reverse selection mechanism; and the recording, by the network device, the first reference version information comprises:
updating and recording, by the network device, the first reference version information and the third reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device does not comprise the identifier of the first data object; or
updating and recording, by the network device, the first reference version information if a data granularity of the first data object corresponding to the first reference version information meets a data granularity at which the network device sets the access control function, a data granularity of the third data object corresponding to the third reference version information meets the data granularity at which the network device sets the access control function, and a reverse selection mechanism parameter of the access control function that is set by the network device comprises the identifier of the first data object.

10. The method according to any one of claims 1 to 9, wherein the method further comprises:
receiving, by the network device, an access control function setting request message sent by the first client, wherein the access control function setting request message comprises the identifier of the first data object;
setting, by the network device, an initial version information value for the first data object based on the identifier of the first data object if the network device determines, based on the identifier of the first data object, that the first data object meets an access control function setting condition; and
sending, by the network device, a setting success response message to the first client, wherein the setting success response message indicates the first client to record the version information of the first data object.

11. The method according to claim 10, wherein the setting success response message comprises the initial version information value, or the setting success response message indicates the first client to set the initial version information value for the first data object.

12. The method according to claim 10 or 11, wherein the access control function setting condition comprises: the network device supports setting of the access control function, and the first data object has no version information.

13. The method according to claim 12, wherein the access control function setting condition further comprises: the data granularity of the first data object meets a data granularity that is of setting the access control function and that is supported by the network device.

14. The method according to any one of claims 10 to 13, wherein the access control function setting request message further comprises the reverse selection mechanism parameter, the reverse selection mechanism parameter comprises an identifier of one or more fourth data objects, and the fourth data object is a child data object of the first data object.

15. The method according to any one of claims 1 to 14, wherein the method further comprises:
receiving, by the network device, an access control function setting deletion request message sent by the first client, wherein the access control function setting deletion request message comprises the identifier of the first data object; and
deleting, by the network device, the version information of the first data object based on the identifier of the first data object if the network device determines, based on the identifier of the first data object, that the first data object meets an access control function setting deletion condition.

16. The method according to any one of claims 1 to 15, wherein the method further comprises:
sending, by the network device, a capability notification message to the first client, wherein the capability notification message comprises a support capability parameter of the access control function, and the support capability parameter indicates whether the network device supports setting of the access control function.

17. The method according to claim 16, wherein the capability notification message further comprises a support granularity parameter of the access control function, the support granularity parameter indicates that the network device supports the data granularity of setting the access control function, and the data granularity comprises one or more of a dataset granularity, a YANG module granularity, and a data node granularity.

18. A configuration update method, wherein the method comprises:
sending, by a first client, a network configuration protocol NETCONF configuration request message to a network device, wherein the NETCONF configuration request message comprises operation indication information, the operation indication information indicates that the first client requests the network device to perform an operation on a first data object, the operation indication information comprises first version information, the first version information is version information, of the first data object, recorded by the first client, and the first data object comprises configuration data of the network device, wherein
the configuration request message indicates, if the network device detects that the first version information is consistent with first reference version information, the network device to perform the operation on the first data object, wherein the first reference version information is version information, of the first data object, recorded by the network device.

19. The method according to claim 18, wherein after the sending, by a first client, a network configuration protocol NETCONF configuration request message to a network device, the method further comprises:
receiving, by the first client, a configuration success response message sent by the network device; and
recording, by the first client, the first version information.

20. The method according to claim 19, wherein the configuration success response message comprises updated first reference version information; and
the recording, by the first client, the first version information comprises:
updating and recording, by the first client, the first version information as the updated first reference version information.

21. A configuration update apparatus, wherein the apparatus is applied to a network device, and the apparatus comprises:
a first receiving module, configured to receive a network configuration protocol NETCONF configuration request message sent by a first client, wherein the NETCONF configuration request message comprises operation indication information, the operation indication information indicates that the first client requests the network device to perform an operation on a first data object, the operation indication information comprises first version information, the first version information is version information, of the first data object, recorded by the first client, and the first data object comprises configuration data of the network device; and
a configuration update module, configured to perform the operation on the first data object if the network device detects that the first version information is consistent with first reference version information, wherein the first reference version information is version information, of the first data object, recorded by the network device.

22. The apparatus according to claim 21, wherein the NETCONF configuration request message is sent if the first client detects that the first version information is consistent with the first reference version information.

23. The apparatus according to claim 22, wherein the apparatus further comprises:
a second receiving module, configured to receive a query message sent by the first client, wherein the query message comprises an identifier of the first data object; and
a first sending module, configured to send a query response message to the first client, wherein the query response message comprises the version information, of the first data object, recorded by the network device.

24. The apparatus according to claim 22 or 23, wherein the apparatus further comprises:
a second sending module, configured to send a data change notification message to the first client, wherein the data change notification message comprises the version information, of the first data object, recorded by the network device, and the data change notification message is sent by the network device if the first client subscribes to a change notification of data in the first data object.

25. The apparatus according to any one of claims 21 to 24, wherein the apparatus further comprises:
a processing module, configured to complete performing the operation on the first data object; and
a recording module, configured to record the first reference version information.

26. The apparatus according to claim 25, wherein the recording module comprises:
a first recording submodule, configured to update and record the first reference version information if a data granularity of the first data object corresponding to the first reference version information meets a data granularity at which the network device sets an access control function.

27. The apparatus according to claim 25, wherein the operation indication information further comprises an identifier of a second data object, the first data object is a child data object of the second data object, and second reference version information is version information, of the second data object, recorded by the network device; and
the recording module comprises:
a second recording submodule, configured to update and record the first reference version information and the second reference version information if a data granularity of the first data object corresponding to the first reference version information meets a data granularity at which the network device sets an access control function, and a data granularity of the second data object corresponding to the second reference version information meets the data granularity at which the network device sets the access control function.

28. The apparatus according to any one of claims 21 to 27, wherein the apparatus further comprises:
a third receiving module, configured to receive an access control function setting request message sent by the first client, wherein the access control function setting request message comprises the identifier of the first data object;
a setting module, configured to set an initial version information value for the first data object based on the identifier of the first data object if the network device determines, based on the identifier of the first data object, that the first data object meets an access control function setting condition; and
a third sending module, configured to send a setting success response message to the first client, wherein the setting success response message indicates the first client to record the version information of the first data object.

29. The apparatus according to claim 28, wherein the setting success response message comprises the initial version information value, or the setting success response message indicates the first client to set the initial version information value for the first data object.

30. The apparatus according to claim 28 or 29, wherein the access control function setting condition comprises: the network device supports setting of the access control function, and the first data object has no version information.

31. The apparatus according to any one of claims 21 to 30, wherein the apparatus further comprises:
a fourth receiving module, configured to receive an access control function setting deletion request message sent by the first client, wherein the access control function setting deletion request message comprises the identifier of the first data object; and
a deletion module, configured to delete the version information of the first data object based on the identifier of the first data object if the network device determines, based on the identifier of the first data object, that the first data object meets an access control function setting deletion condition.

32. The apparatus according to any one of claims 21 to 31, wherein the apparatus further comprises:
a fourth sending module, configured to send a capability notification message to the first client, wherein the capability notification message comprises a support capability parameter of the access control function, and the support capability parameter indicates whether the network device supports setting of the access control function.

33. A configuration update apparatus, wherein the apparatus is applied to a first client, and the apparatus comprises:
a first sending module, configured to send a network configuration protocol NETCONF configuration request message to a network device, wherein the NETCONF configuration request message comprises operation indication information, the operation indication information indicates that the first client requests the network device to perform an operation on a first data object, the operation indication information comprises first version information, the first version information is version information, of the first data object, recorded by the first client, and the first data object comprises configuration data of the network device, wherein
the configuration request message indicates, if the network device detects that the first version information is consistent with first reference version information, the network device to perform the operation on the first data object, wherein the first reference version information is version information, of the first data object, recorded by the network device.

34. The apparatus according to claim 33, wherein the apparatus further comprises:
a receiving module, configured to receive a configuration success response message sent by the network device; and
a recording module, configured to record the first version information.

35. The apparatus according to claim 34, wherein the configuration success response message comprises updated first reference version information; and
the recording module comprises:
a recording submodule, configured to update and record the first version information as the updated first reference version information.

36. A configuration update system, wherein the system comprises a plurality of clients and a network device, the plurality of clients are configured to configure the network device by using a network configuration protocol NETCONF, and a first client is one of the plurality of clients;
the network device is configured to implement the steps of the method according to any one of claims 1 to 17; and
the first client is configured to implement the steps of the method according to any one of claims 18 to 20.

37. A computer-readable storage medium, wherein the storage medium stores a computer program; when the computer program is executed by a processor, the steps of the method according to any one of claims 1 to 17 are implemented, or the steps of the method according to any one of claims 18 to 20 are implemented.
